# EUROPEAN PATENT SPECIFICATION

(11) **EP 1 517 017 B1**
(45) Date of publication and mention of the grant of the patent: **16.04.2008**
(21) Application number: 04022454.5
(22) Date of filing: 21.09.2004
(51) Int. Cl.: F02B 23/10

(54) **Spark-ignition direct-injection engine**
Fremdgezündete Brennkraftmaschine mit Direkt-Einspritzung
Moteur à injection directe à allumage commandé

(30) Priority: 22.09.2003 JP 2003329426; 22.09.2003 JP 2003329427; 22.09.2003 JP 2003329428
(43) Date of publication of application: 23.03.2005
(73) Proprietor: Mazda Motor Corporation, Aki-gun, Hiroshima 730-8670 (JP)
(72) Inventor: Aoki, Osamu, Aki-gun Hiroshima 730-8670 (JP); Fujimoto, Hidefumi, Aki-gun Hiroshima 730-8670 (JP); Yamashita, Hiroyuki, Aki-gun Hiroshima 730-8670 (JP); Seto, Masatoshi, Aki-gun Hiroshima 730-8670 (JP); Yoshida, Hiroyuki, Aki-gun Hiroshima 730-8670 (JP); Yamakawa, Masahisa, Aki-gun Hiroshima 730-8670 (JP); Aiga, Shoichi, Aki-gun Hiroshima 730-8670 (JP); Matsuo, Yoshitomo, Aki-gun Hiroshima 730-8670 (JP); Ohta, Noriyuki, Aki-gun Hiroshima 730-8670 (JP); Nou, Yoshihisa, Aki-gun Hiroshima 730-8670 (JP); Kageyama, Akira, Aki-gun Hiroshima 730-8670 (JP)
(74) Representative: Müller-Boré & Partner Patentanwälte

(56) References cited:
- EP-A- 1 209 335
- US-A- 4 974 565
- PATENT ABSTRACTS OF JAPAN vol. 2000, no. 26, 1 July 2002 (2002-07-01) & JP 2001 248443 A (TOYOTA MOTOR CORP), 14 September 2001 (2001-09-14)

## Description

### BACKGROUND OF THE INVENTION

### 1. Field of the Invention

The present invention relates to spark-ignition direct-injection engines. More particularly, the invention pertains to spark-ignition direct-injection engines provided with fuel injectors having a plurality of spray holes in an injector nozzle.

### 2. Description of the Related Art

There exists a conventionally known spark-ignition direct-injection engine which is provided with a spark plug and an fuel injector for feeding fuel directly into a combustion chamber to achieve an improvement in fuel economy by producing stratified charge combustion, such as US-4974565. In this kind of engine, it is necessary to accelerate evaporation and atomization of the fuel while minimizing dispersion of the fuel and to maintain a condition under which an ignitable mixture having an appropriate air-fuel ratio is locally distributed around an electrode of the spark plug.

One of conventional arrangements for achieving such objectives is disclosed in Japanese Unexamined Patent Publication No. 2001-248443, for example. According to the arrangement of this Patent Publication, fuel is sprayed directly toward an electrode of a spark plug while an airflow is produced close to a fuel spray on the underside thereof or on each lateral side thereof to prevent spreading of the fuel spray. The arrangement of this Patent Publication, however, has a problem that since the fuel is sprayed directly against the electrode, the fuel is likely to adhere to the electrode in the form of droplets, resulting in deterioration of ignitability.

Another conventional arrangement applicable to the spark-ignition direct-injection engine is shown in Japanese Unexamined Patent Publication No. 2002-130082, which proposes a fuel injector having a plurality of spray holes. (This type of fuel injector is hereinafter referred to as the multihole injector.)

The inventors have found, through an intensive study of fuel injection, that it is possible to produce an ignitable mixture gathering around an electrode of a spark plug, the mixture having an appropriate air-fuel ratio, while preventing fuel adhesion to the electrode by using a multihole injector.

Based on this finding, the inventors have devised a technique of using a multihole injector which injects fuel through multiple spray holes, producing a properly atomized mist of fuel. The spray holes of this injector are located such that the fuel is sprayed to surrounding areas of the electrode, and not directly against the electrode. Since the central axis of each of fuel sprays spewed out of the spray holes is offset from the electrode of the spark plug, it is possible to reduce the quantity of fuel droplets adhering to the electrode.

The study of fuel injection has also led the inventors to a finding that, by using the multihole injector, it is possible to obtain an advantageous effect produced by mutual interference among the fuel sprays ejected from the individual spray holes of the injector if a proper relationship is established among angles of the fuel sprays formed by the individual spray holes.

Specifically, the study conducted by the inventors has revealed that the mutual interference effect of the fuel sprays is produced when the angle between the axes of the adjacent spray holes and the included angle of each fuel spray (or the spray angle) are set in such a way that the individual fuel sprays come close to one another.

More specifically, when the fuel sprays spewed out of the individual spray holes are brought closer to one another, the volume of air held in each space between the adjacent fuel sprays decreases. In this situation, masses of air surrounding the individual fuel sprays are entrained by the fuel sprays to a lesser degree, so that the moving speed of each fuel spray increases.

As a consequence, the air pressure in the spaces between the adjacent fuel sprays decreases and the individual fuel sprays are pulled closer to one another. Because the individual fuel sprays come closer to one another, and also because the moving speed of each fuel spray increases as stated above, finely atomized denser (richer) mixture masses are formed on a central, or inner, side of the spaces between the adjacent fuel sprays while finely atomized thinner (leaner) mixture masses are formed on an outer side of the spaces between the adjacent fuel sprays. It is therefore possible to produce the finely atomized denser mixture masses gathering around the electrode of the spark plug by using the multihole injector, and thereby achieve enhanced ignitability.

The technique devised by the inventors is intended to enhance the ignitability not simply by using the multihole injector but by exploiting the aforementioned mutual interference effect produced when the angle between the axes of the adjacent spray holes and the spray angle are properly set.

Generally, the spark-ignition direct-injection engine is constructed to produce not only the aforementioned stratified charge combustion but also homogeneous charge combustion. When the engine is run by the homogeneous charge combustion, the mixture must not gather in the vicinity of the electrode of the spark plug unlike the case of the stratified charge combustion, but it is essential to produce a homogeneous mixture which is uniformly distributed in an entire combustion chamber.

One approach to producing successful homogeneous charge combustion by using the multihole injector would be to form piston-side spray holes directed toward a top surface of a piston in addition to plug-side spray holes directed toward the vicinity of the electrode of the spark plug in an injector nozzle tip, the piston-side spray holes being located beneath the plug-side spray holes, so that the mixture is homogenized when the engine is run by the homogeneous charge combustion.

If the piston-side spray holes are simply formed in the nozzle tip in addition to the plug-side spray holes, however, the aforementioned mutual interference effect would occur between the piston-side spray holes and the plug-side spray holes. This would develop a problem that the mixture can not be gathered in the vicinity of the electrode of the spark plug when the engine is run by the stratified charge combustion.

Specifically, this problem occurs as follows. The fuel sprays ejected from the plug-side spray holes are drawn toward the fuel sprays ejected from the piston-side spray holes due to the mutual interference effect so that the fuel sprays ejected from the plug-side spray holes are brought away from the electrode of the spark plug. Therefore, the fuel sprays can not be gathered in the vicinity of the electrode of the spark plug when the engine is run by the stratified charge combustion.

### SUMMARY OF THE INVENTION

This invention has been made in consideration of the aforementioned problems of the prior art. Accordingly, it is an object of the invention to provide a spark-ignition direct-injection engine which can produce a well homogenized mixture in a combustion chamber during execution of homogeneous charge combustion while ensuring good ignitability during execution of stratified charge combustion.

To achieve the aforementioned object, the invention provides the following solutions.

According to the invention, a spark-ignition direct-injection engine includes a spark plug mounted in the engine with an electrode of the spark plug extending into a combustion chamber formed in a cylinder, a fuel injector for injecting fuel into the combustion chamber, a fuel spraying direction in which the fuel injector injects the fuel being directed toward the vicinity of the electrode of the spark plug, and a fuel injection timing controller for setting a fuel injection point of the fuel injector in a compression stroke when the engine is run by stratified charge combustion and in an intake stroke when the engine is run by homogeneous charge combustion. The fuel injector has an electrode bottom-side spray hole of which axis is directed to an area immediately on the underside of the electrode of the spark plug and a piston-side spray hole of which axis is directed to an area further on the underside of the area to which the axis of the electrode bottom-side spray hole is directed as viewed from the fuel injector in the fuel spraying direction, a fuel spray ejected from each of the spray holes having a spray angle. The electrode bottom-side spray hole and the piston-side spray hole are arranged such that the angle between the axes of the electrode bottom-side spray hole and the piston-side spray hole is larger than the spray angle of the fuel ejected from each of the two spray holes when the engine is run by the stratified charge combustion.

In this spark-ignition direct-injection engine of the invention, the angle between the axes of the electrode bottom-side spray hole and the piston-side spray hole becomes larger than the spray angle of the fuel ejected from each of the two spray holes when the engine is run by the stratified charge combustion in which the spray angle of the fuel ejected from each of the two spray holes becomes larger than in the homogeneous charge combustion. Accordingly, the volume of air held in a space between fuel sprays ejected from the two spray holes increases, making it possible to suppress the occurrence of mutual interference between the fuel sprays ejected from the two spray holes, when the engine is run by the stratified charge combustion. Consequently, it is possible to prevent the fuel spray ejected from the electrode bottom-side spray hole from being drawn toward the axis of the piston-side spray hole and thereby gather atomized mixture masses in the vicinity of the electrode of the spark plug.

Preferably, the cylinder is provided with two intake valves, a nozzle tip of the fuel injector is located between the two intake valves, and the aforementioned two spray holes are located outside a movable range of the two intake valves as viewed along a longitudinal axis of the fuel injector in the fuel spraying direction.

This structure makes it possible to prevent the fuel sprays ejected from the two spray holes from striking the intake valves in the best possible way.

Preferably, the fuel injector has a plurality of piston-side spray holes located adjacent to each other, the piston-side spray holes individually having own axes, wherein the angle between the axes of the electrode bottom-side spray hole and any of the piston-side spray holes adjacent to the electrode bottom-side spray hole is larger than the angle between the axes of the adjacent piston-side spray holes.

In this structure, the angle between the axes of the electrode bottom-side spray hole and any of the piston-side spray holes adjacent to the electrode bottom-side spray hole is made larger than the angle between the axes of the adjacent piston-side spray holes, so that the volume of air held in a space between the fuel sprays ejected from the electrode bottom-side spray hole and any adjacent piston-side spray hole increases, making it possible to suppress the occurrence of mutual interference between the fuel sprays ejected from the two spray holes, when the engine is run by the stratified charge combustion. Consequently, it is possible to prevent the fuel spray ejected from the electrode bottom-side spray hole from being drawn toward the axis of the adjacent piston-side spray hole and thereby gather atomized mixture masses in the vicinity of the electrode of the spark plug. When the engine is run by the homogeneous charge combustion, on the other hand, it is possible to produce a mixture distributed uniformly in the entire combustion chamber because the fuel is sprayed from the electrode bottom-side spray hole and the multiple piston-side spray holes. This makes it possible to achieve improved homogenization of the mixture in the combustion chamber.

In one feature of the invention, the angle between the axes of the electrode bottom-side spray hole and any of the piston-side spray holes should preferably be made at least 25° large.

The inventors conducted repetitive experiments to determine whether the mutual interference occurs between the fuel sprays at different angles between the axes of adjacent spray holes under specified conditions. Results of the experiments have revealed that the mutual interference can be suppressed in a reliable fashion if the angle between the axes of the spray holes is set to 25° or larger. Since the angle between the axes of the electrode bottom-side spray hole and any of the piston-side spray holes is made at least 25° large in the aforementioned structure, it is possible to reliably suppress the mutual interference between the fuel sprays ejected from the electrode bottom-side spray hole and any of the piston-side spray holes. Consequently, it is possible to prevent the fuel spray ejected from the electrode bottom-side spray hole from being drawn toward the axis of the adjacent piston-side spray hole and thereby gather atomized mixture masses in the vicinity of the electrode of the spark plug.

In another feature of the invention, the fuel injector further has at least one side-of-the-electrode spray hole of which axis is directed to an area located on a lateral side of the electrode of the spark plug as viewed from the fuel injector in the fuel spraying direction, wherein the angle between the axes of the electrode bottom-side spray hole and the piston-side spray hole is larger than the angle between the axes of the electrode bottom-side spray hole and the side-of-the-electrode spray hole. To improve ignitability of the mixture by gathering mixture masses in the vicinity of the electrode of the spark plug in the stratified charge combustion, it is preferable to form the side-of-the-electrode spray hole directed to the area located on a lateral side of the electrode of the spark plug in the fuel injector in addition to the electrode bottom-side spray hole directed to the area immediately on the underside of the electrode.

As it is desired to positively utilize the mutual interference occurring between the adjacent fuel sprays to improve ignitability of the mixture when the engine is run by the stratified charge combustion, it is necessary to arrange the electrode bottom-side spray hole and the side-of-the-electrode spray hole in such a way that the aforementioned mutual interference effect is obtained, whereas the electrode bottom-side spray hole and any piston-side spray hole should preferably be arranged in such a way that the mutual interference effect does not occur between the fuel sprays ejected from the electrode bottom-side spray hole and the piston-side spray hole.

According to the aforementioned structure of the invention, the angle between the axes of the electrode bottom-side spray hole and the piston-side spray hole of the fuel injector is made larger than the angle between the axes of the electrode bottom-side spray hole and the side-of-the-electrode spray hole, so that the volume of air held in the space between fuel sprays ejected from the electrode bottom-side spray hole and any adjacent piston-side spray hole increases, making it possible to suppress the occurrence of mutual interference between the fuel sprays ejected from the two spray holes, when the engine is run by the stratified charge combustion. Consequently, it is possible to prevent the fuel spray ejected from the electrode bottom-side spray hole from being drawn toward the axis of the adjacent piston-side spray hole and thereby gather atomized mixture masses in the vicinity of the electrode of the spark plug.

In the aforementioned structure, the angle between the axes of the electrode bottom-side spray hole and the side-of-the-electrode spray hole is made small so that the mutual interference occurs between the fuel sprays ejected from these two spray holes. This makes it possible to gather atomized mixture masses in the vicinity of the electrode of the spark plug and thereby improve ignitability of the mixture when the engine is run by the stratified charge combustion.

When the engine is run by the homogeneous charge combustion, on the other hand, it is possible to produce a mixture uniformly distributed in the entire combustion chamber because the fuel is sprayed from the electrode bottom-side spray hole and the multiple piston-side spray holes. This makes it possible to achieve enhanced homogenization of the mixture in the combustion chamber.

Preferably, the aforementioned spark-ignition direct-injection engine of the invention further includes a fuel pressure controller for setting the pressure applied to the fuel supplied to the fuel injector to a level suited for the stratified charge combustion when the engine is run by the stratified charge combustion. In this spark-ignition direct-injection engine, the electrode bottom-side spray hole and the side-of-the-electrode spray hole are arranged such that the angle between the axes of the electrode bottom-side spray hole and the side-of-the-electrode spray hole becomes equal to or smaller than the spray angle of the fuel ejected from each of the electrode bottom-side spray hole and the side-of-the-electrode spray hole when the engine is run by the stratified charge combustion.

In the spark-ignition direct-injection engine thus structured, the angle between the axes of the electrode bottom-side spray hole and the side-of-the-electrode spray hole becomes equal to or smaller than the spray angle of the fuel ejected from each of these spray holes when the engine is run by the stratified charge combustion, so that the volume of air held in a space between fuel sprays ejected from the electrode bottom-side spray hole and the side-of-the-electrode spray hole decreases. This makes it possible to produce mutual interference between the fuel sprays ejected from the electrode bottom-side spray hole and the side-of-the-electrode spray hole and thereby improve ignitability of the mixture when the engine is run by the stratified charge combustion.

Preferably, the aforementioned spark-ignition direct-injection engine of the invention further includes a fuel pressure regulator which regulates the pressure applied to the fuel supplied to the fuel injector when the engine is in a warm operating state to a level higher than a fuel pressure applied at cold engine starting, wherein the fuel injection timing controller sets the fuel injection point of the fuel injector to a point suited for the homogeneous charge combustion when the engine is in a cold operating state in which engine temperature is lower than a specified level and to a point suited for the stratified charge combustion at least in a part-load range when the engine is in the warm operating state in which the engine temperature is equal to or higher than the specified level, and wherein the fuel injector further has at least one side-of-the-electrode spray hole of which axis is directed to an area located on a lateral side of the electrode of the spark plug as viewed from the fuel injector in the fuel spraying direction. In this spark-ignition direct-injection engine, the electrode bottom-side spray hole and the side-of-the-electrode spray hole are arranged such that the angle between the axes of the electrode bottom-side spray hole and the side-of-the-electrode spray hole becomes equal to or smaller than the spray angle of the fuel ejected from each of the electrode bottom-side spray hole and the side-of-the-electrode spray hole under the fuel pressure regulated by the fuel pressure regulator when the engine is in the warm operating state in which the fuel injection point of the fuel injector is set to the point suited for the stratified charge combustion, and such that the angle between the axes of the electrode bottom-side spray hole and the side-of-the-electrode spray hole becomes larger than the spray angle of the fuel ejected from each of the electrode bottom-side spray hole and the side-of-the-electrode spray hole under the fuel pressure regulated by the fuel pressure regulator when the engine is in the cold operating state.

In the spark-ignition direct-injection engine thus structured, the angle between the axes of the electrode bottom-side spray hole and the side-of-the-electrode spray hole of the fuel injector becomes equal to or smaller than the spray angle of the fuel ejected from each of these spray holes when the engine is in the warm operating state in which the fuel pressure and in-cylinder pressure are high and the spray angle tends to increase. Therefore, the volume of air held in a space between fuel sprays ejected from the electrode bottom-side spray hole and the side-of-the-electrode spray hole decreases so that the aforementioned mutual interference effect is exerted between the adjacent fuel sprays. This serves to provide enhanced ignitability of the mixture when the engine is in the warm operating state.

When the engine is in the cold operating state in which both the fuel pressure and the in-cylinder pressure are low and the spray angle tends to increase, on the other hand, the angle between the axes of the electrode bottom-side spray hole and the side-of-the-electrode spray hole of the fuel injector becomes larger than the spray angle of the fuel ejected from each of these spray holes. Therefore, the volume of air held in the space between the fuel sprays ejected from the electrode bottom-side spray hole and the side-of-the-electrode spray hole increases, making it possible to suppress the aforementioned mutual interference effect. Consequently, it is possible to prevent deterioration of the ignitability due to adhesion of a great deal of fine mixture droplets to the electrode of the spark plug when the engine is in the cold operating state.

Preferably, the cylinder is provided with two intake valves, a nozzle tip of the fuel injector is located between the two intake valves, and the electrode bottom-side spray hole is located outside a movable range of the two intake valves while the side-of-the-electrode spray hole is located inside the movable range of the two intake valves as viewed along a longitudinal axis of the fuel injector in the fuel spraying direction.

Generally, it is desirable that the two spray holes be located outside the movable range of the intake valves so that the fuel sprays ejected from the spray holes would not strike the intake valves. In the aforementioned structure of the invention, the electrode bottom-side spray hole among the two spray holes is located outside the movable range of the intake valves. It is therefore possible to gather mixture masses in the vicinity of the electrode of the spark plug and thereby improve ignitability of the mixture while preventing the fuel spray ejected from at least the electrode bottom-side spray hole from striking the intake valves.

In another feature of the invention, the angle between the axes of the electrode bottom-side spray hole and the side-of-the-electrode spray hole should preferably be set within a range of 15° to 25° .

The inventors have found, through an intensive study of fuel injection, that it is possible to properly produce the aforementioned mutual interference effect between the adjacent fuel sprays while preventing the mutual interference effect from becoming excessively strong if the angle between the axes of the electrode bottom-side spray hole and the side-of-the-electrode spray hole is set within the range of 15° to 25°. If the angle between the axes of the two spray holes is too small, the volume of air held in the space between the fuel sprays ejected from the two spray holes is small. In this case, the mutual interference effect acts to a great degree on the adjacent fuel sprays and this develops a problem that the fuel sprays pass by the vicinity of the electrode of the spark plug and can not be gathered in the vicinity of the electrode. If the angle between the axes of the two spray holes is too large, on the contrary, the fuel sprays are separated so much from each other that the mutual interference effect can not be produced.

The inventors have ascertained from an analysis of experimental results that such problems dot not occur if the angle between the axes of the two spray holes is set within the range of 15° to 25°. In the aforementioned structure of the invention, the angle between the axes of the electrode bottom-side spray hole and the side-of-the-electrode spray hole is set within this range of 15° to 25°, so that it is possible to produce an appropriate level of mutual interference between the fuel sprays ejected from the two spray holes and thereby improve ignitability of the mixture while preventing the mutual interference effect from becoming excessively strong.

In another feature of the invention, the distance from each of the electrode bottom-side spray hole and the side-of-the-electrode spray hole to the electrode of the spark plug should preferably be set to at least 20 mm large.

The inventors have found, through an intensive study, that a fuel mist ejected from spray holes gradually spreads in a generally conical shape as the fuel mist moves away from each spray hole and the aforementioned mutual interference occurs between adjacent fuel sprays when their conical outer surfaces come close to each other. The inventors have ascertained from an analysis of experimental results that the mutual interference between the adjacent fuel sprays occurs at a distance of 20 mm or more from the spray holes. In the aforementioned structure of the invention, the distance from each of the electrode bottom-side spray hole and the side-of-the-electrode spray hole to the electrode of the spark plug is set to at least 20 mm large, so that it is possible to produce the mutual interference between the fuel sprays ejected from the two spray holes and thereby improve ignitability of the mixture.

Preferably, the cylinder is provided with two intake valves, a nozzle tip of the fuel injector is located at a peripheral part of the combustion chamber between the two intake valves, the axis of the electrode bottom-side spray hole of the fuel injector directed to the area immediately on the underside of the electrode of the spark plug is located outside a movable range of the two intake valves as viewed from the fuel injector in the fuel spraying direction, the fuel injector further has at least one side-of-the-electrode spray hole of which axis is directed to an area located on a lateral side of the electrode of the spark plug inside the movable range of the two intake valves as viewed from the fuel injector in the fuel spraying direction, the axis of the side-of-the-electrode spray hole is located above umbrellalike upper surfaces of the intake valves in a middle part of the intake stroke during which the lift of the intake valves increases, and the fuel injection timing controller sets the fuel injection point in the middle part of the intake stroke when the engine is run by the homogeneous charge combustion.

In this structure, the axis of the electrode bottom-side spray hole is located outside the movable range of the two intake valves, the axis of the side-of-the-electrode spray hole is located above the umbrellalike upper surfaces of the intake valves in the middle part of the intake stroke, and the fuel injection point is set in the middle part of the intake stroke when the engine is run by the homogeneous charge combustion. Therefore, it is possible to prevent the fuel ejected from the electrode bottom-side spray hole from striking the intake valves when the engine is run by the homogeneous charge combustion. Also, since the side-of-the-electrode spray hole ejects the fuel in the middle part of the intake stroke when the axis of the side-of-the-electrode spray hole is located above the umbrellalike upper surfaces of the intake valves, it is possible to prevent the fuel ejected from the side-of-the-electrode spray hole from striking the intake valves when the engine is run by the homogeneous charge combustion.

In addition, since the fuel is injected in the middle part of the intake stroke when intake air is drawn at a high flow velocity, the aforementioned structure allows for effective mixing of the fuel and the intake air and further homogenization of the mixture. It is therefore possible to produce an improved homogeneous mixture when the engine is run by the homogeneous charge combustion. Furthermore, because atomized fuel masses ejected from the electrode bottom-side spray hole and the side-of-the-electrode spray hole are caused to gather in the vicinity of the electrode of the spark plug, it is possible to improve ignitability of the mixture when the engine is run by the homogeneous charge combustion.

Still preferably, the fuel injector has two side-of-the-electrode spray holes of which axes are directed to areas located on both lateral sides of the electrode of the spark plug, and the electrode bottom-side spray hole and the two side-of-the-electrode spray holes are located generally at apexes of a triangle surrounding the electrode of the spark plug centering on a longitudinal axis of the fuel injector as viewed in the fuel spraying direction.

In this structure, the electrode of the spark plug is surrounded by fuel sprays ejected from the three spray holes, so that it is possible to sufficiently gather atomized mixture masses in the vicinity of the electrode of the spark plug and thereby enhance ignitability of the mixture when the engine is run by the homogeneous charge combustion.

In another feature of the invention, the angle between the axes of the two side-of-the-electrode spray holes should preferably be made larger than the angle between the axes of each of the side-of-the-electrode spray holes and the electrode bottom-side spray hole.

In this structure, mutual interference does not occur between the fuel sprays ejected from the two side-of-the-electrode spray holes. Since these fuel sprays are not drawn toward each other by the aforementioned mutual interference effect, the electrode of the spark plug is not wetted by fuel droplets and this serves to ensure ignitability of the mixture.

Still preferably, an upper part of an outer boundary surface of a fuel spray ejected from the side-of-the-electrode spray hole is generally parallel to an intake valve side portion of a ceiling of the combustion chamber.

In this structure, the upper part of the outer boundary surface of a fuel spray ejected from the side-of-the-electrode spray hole is generally parallel to the intake valve side portion of the ceiling of the combustion chamber, it is possible to prevent the fuel spray ejected from the side-of-the-electrode spray hole from striking the ceiling of the combustion chamber.

Still preferably, the angle between the axes of the electrode bottom-side spray hole and the side-of-the-electrode spray hole is set within a range of 15° to 25°.

Since the angle between the axes of the electrode bottom-side spray hole and the side-of-the-electrode spray hole is set within the range of 15° to 25° in this structure, it is possible to produce an appropriate level of mutual interference between the fuel sprays ejected from the two spray holes and thereby improve ignitability of the mixture while preventing the mutual interference effect from becoming excessively strong.

Still preferably, the axis of the side-of-the-electrode spray hole is located above a top surface of the piston when the piston is at a top dead center position in the intake stroke as viewed from the fuel injector in the fuel spraying direction.

Since the axis of the side-of-the-electrode spray hole is located above the top surface of the piston when the fuel is injected in the intake stroke in this structure, it is possible to prevent the fuel spray ejected from the side-of-the-electrode spray hole from striking the top surface of the piston.

It will be recognized from the features of the invention summarized above that the spark-ignition direct-injection engine of the invention allows for improved homogenization of the mixture while ensuring good ignitability with the aid of the mutual interference between the fuel sprays when the engine is run by the stratified charge combustion.

### BRIEF DESCRIPTION OF THE DRAWINGS

FIG. 1 is a diagram generally showing the structure of a spark-ignition direct-injection engine according to a first embodiment of the invention;
FIG. 2 is a vertical cross-sectional diagram showing part of a cylinder head and one of cylinders of the engine of FIG. 1;
FIG. 3 is a general configuration diagram of a fuel supply system of the engine of FIG. 1;
FIG. 4A is a diagram showing a warm-state fuel injection control map used when the engine is in a warm operating state;
FIG. 4B is a diagram showing a cold-state fuel injection control map used when the engine is in a cold operating state;
FIG. 5A is a diagram showing a warm-state fuel pressure control map used when the engine is in the warm operating state;
FIG. 5B is a diagram showing the cold-state fuel pressure control map used when the engine is in the cold operating state;
FIG. 6 is a perspective diagram showing how fuel is sprayed from a fuel injector of the first embodiment;
FIG. 7 is a diagram schematically showing three-dimensional inclination angles of axes of individual spray holes with respect to a longitudinal axis of the fuel injector as viewed along the longitudinal axis of the fuel injector toward its fuel spraying direction;
FIG. 8A is a diagram showing the relationship between the spray angle of fuel ejected from each of the first to third spray holes of the fuel injector of the first embodiment and the angle between the axes of the first and second spray holes and between the axes of the first and third spray holes when the engine is in the warm operating state;
FIG. 8B is a diagram showing the relationship between the spray angle of fuel ejected from each of the first to third spray holes of the fuel injector of the first embodiment and the angle between the axes of the first and second spray holes and between the axes of the first and third spray holes at cold engine starting;
FIG. 9A is a diagram showing the relationship between the spray angle of fuel ejected from the first and fifth spray holes and the angle between the axes of the first and fifth spray holes when the engine is in the warm operating state;
FIG. 9B is a diagram showing the relationship between the spray angle of fuel ejected from the first and fifth spray holes and the angle between the axes of the first and fifth spray holes at cold engine starting;
FIG. 10 is an explanatory diagram showing how a fuel mist is distributed within a fuel spray;
FIG. 11A is a diagram showing how the spray angle of the fuel spray is defined;
FIG. 11B is a diagram showing how penetration of the fuel spray is defined;
FIG. 12 is a cross-sectional diagram showing part of a cylinder head according to a second embodiment of the invention;
FIG. 13 is a plan view of the cylinder head according to the second embodiment of the invention;
FIG. 14A is a diagram showing the relationship between the spray angle of fuel ejected from each of first to third spray holes of a fuel injector of the second embodiment and the angle between the axes of the first and second spray holes and between the axes of the first and third spray holes when the engine is in the warm operating state;
FIG. 14B is a diagram showing the relationship between the spray angle of fuel ejected from each of the first to third spray holes of the fuel injector of the second embodiment and the angle between the axes of the first and second spray holes and between the axes of the first and third spray holes at cold engine starting;
FIG. 15 is a vertical cross-sectional diagram showing part of a cylinder head and one of cylinders with a piston located at a bottom dead center according to a third embodiment of the invention; and
FIG. 16 is a diagram as viewed along arrows A-A of FIG.
15.

### DETAILED DESCRIPTION OF THE PREFERRED EMBODIMENTS OF THE INVENTION

Specific embodiments of the invention are now described in detail with reference to the accompanying drawings.

### FIRST EMBODIMENT

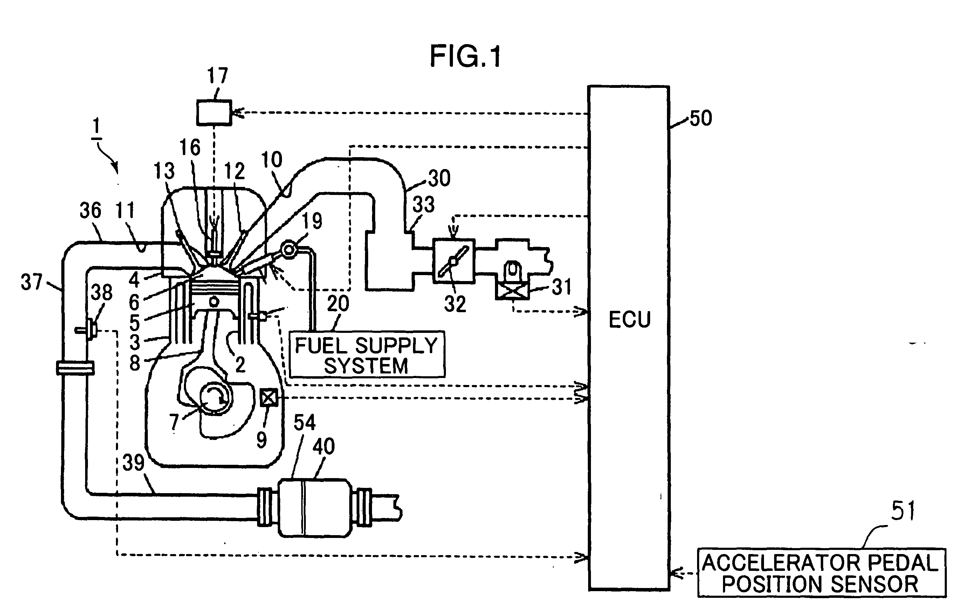

FIG. 1 is a diagram generally showing the structure of a spark-ignition direct-injection engine 1 according to a first embodiment of the invention.

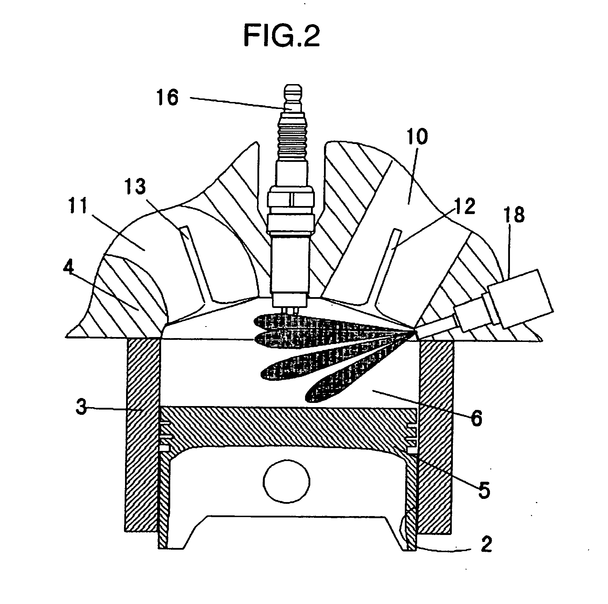

The engine 1 of this embodiment is a multicylinder engine. Specifically, the engine 1 includes a cylinder block 3 having four cylinders 2 arranged in a line (of which only one is shown in FIG. 1), a cylinder head 4 fixed to the top of the cylinder block 3, and pistons 5 fitted movably up and down in the individual cylinders 2. In each of the cylinders 2, there is formed a combustion chamber 6 between the piston 5 and the cylinder head 4. As shown in an enlarged view of FIG. 2, the combustion chamber 6 is a so-called pent-roof combustion chamber of which upper end (ceiling) is shaped like the roof of a house having a pair of oppositely inclined surfaces. This shape of the pent-roof combustion chamber 6 is made by forming a pair of sloping surfaces extending from about a middle part of the ceiling of the combustion chamber 6 to about a lower end surface of the cylinder head 4. On the other hand, there is rotatably supported a crankshaft 7 in the cylinder block 3 below the pistons 5 which are individually connected to the crankshaft 7 by connecting rods 8.

In the cylinder head 4, there are formed two each intake ports 10 and exhaust ports 11 (of which one each is shown in FIGS. 1 and 2) for each cylinder 2. One end of each of the intake ports 10 opens into the combustion chamber 6 through one of the sloping surfaces forming the ceiling of the combustion chamber 6, while opposite end portions of the intake ports 10 extend obliquely upward from the combustion chamber 6 through the cylinder head 4, opening individually to one side surface (right side as illustrated in FIGS. 1 and 2) of the engine 1. At the inner ends of the intake ports 10 opening into the combustion chamber 6, there are fitted two intake valves 12 (of which only one is shown in FIGS. 1 and 2) which are activated to open and close the individual intake ports 10 with specific timing. One end of each of the exhaust ports 11 opens into the combustion chamber 6 through the other of the sloping surfaces forming the ceiling of the combustion chamber 6, while opposite end portions of the exhaust ports 11 join halfway in the cylinder head 4 into a single channel which extends generally horizontally and opens to the opposite side surface (left side as illustrated in FIGS. 1 and 2) of the engine 1. At the inner ends of the exhaust ports 11 opening into the combustion chamber 6, there are fitted exhaust valves 13 (of which only one is shown in FIGS. 1 and 2) which are activated to open and close the individual exhaust ports 11 with specific timing.

As shown in FIG. 1, an intake passage 30 is connected to the side surface of the engine 1 where each intake port 10 opens. Connected to the intake ports 10 of each cylinder 2, the intake passage 30 supplies intake air filtrated by an air cleaner (not shown) into each combustion chamber 6 of the engine 1. There are provided a hot-wire airflow sensor 31 for detecting the quantity of intake air drawn into the engine 1, an electrically-operated throttle valve 32 for regulating the quantity of intake air drawn through the intake passage 30 by constricting it and a surge tank 33 along the intake passage 30 from upstream side to downstream side thereof. The electrically-operated throttle valve 32 is not mechanically connected to an accelerator pedal (not shown) but is caused to open and close, driven by an electric driving motor (not shown).

The intake passage 30 branches into independent passages downstream of the surge tank 33 to supply air to the individual cylinders 2, and each of the independent passages further branches at a downstream end portion thereof into two separate channels connected to the two intake ports 10.

A spark plug 16 is fitted at approximately the center of the ceiling of each combustion chamber 6, as if surrounded by a total of four intake and exhaust valves 12, 13. An electrode of the spark plug 16 at an extreme lower end thereof extends into the combustion chamber 6 by a specific distance from the ceiling of the combustion chamber 6. Upper ends of the individual spark plugs 16 are electrically connected to an ignition circuit 17 which supplies an electric current to the spark plug 16 of each cylinder 2 with specific timing.

Provided at a peripheral part of the combustion chamber 6 in each cylinder 2 between and below the two intake ports 10 is a fuel injector 18 for injecting fuel directly into the combustion chamber 6. This fuel injector 18 is a multihole fuel injector having multiple spray holes (8 spray holes in this embodiment) formed in a nozzle tip. Fuel spraying directions of these spray holes are determined such that fuel sprays ejected from some of the spray holes are directed toward the vicinity of the electrode of the spark plug 16 while fuel sprays ejected from the rest of the spray holes are directed to areas above a top surface of the piston 5.

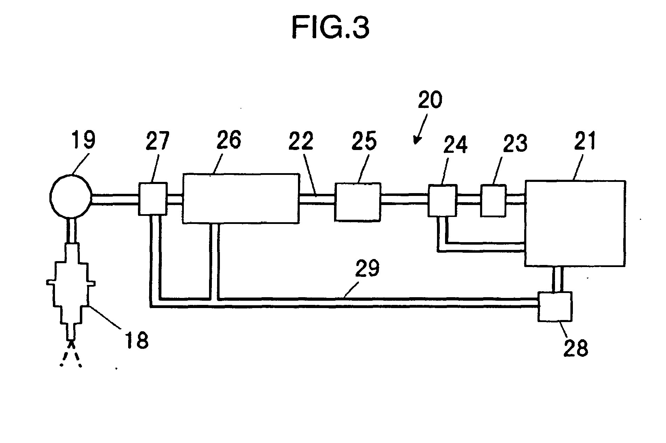

Upstream ends of the individual injectors 18 are connected to a common fuel distributing pipe 19 through which pressurized fuel supplied from a fuel supply system 20 is distributed to the individual cylinders 2. The fuel supply system 20 is structured as shown in FIG. 3, for example, including a fuel supply line 22 connecting the fuel distributing pipe 19 to a fuel tank 21. The fuel supply system 20 further includes a low-pressure fuel pump 23, a low-pressure regulator 24, a fuel filter 25, a high-pressure fuel pump 26 and a high-pressure regulator 27 which are fitted in this order along the fuel supply line 22 from upstream side to downstream side thereof. The high-pressure fuel pump 26 can regulate the pressure of the fuel supplied to the fuel distributing pipe 19. The high-pressure fuel pump 26 and the high-pressure regulator 27 are connected to the fuel tank 21 by a fuel return line 29 in which a low-pressure regulator 28 for regulating the pressure of the fuel returned to the fuel tank 21 is fitted.

The high-pressure fuel pump 26 is fitted to an end of a camshaft (not shown) and is driven as the camshaft rotates.

With the fuel supply system 20 thus constructed, the fuel raised by the low-pressure fuel pump 23 from the fuel tank 21 is supplied to the high-pressure fuel pump 26 through the fuel filter 25 with the fuel pressure regulated by the low-pressure regulator 24. Then, part of the fuel further pressurized by the high-pressure fuel pump 26 is returned to the low-pressure regulator 24 through the fuel return line 29 with the rate of fuel flow regulated by the high-pressure regulator 27 so that the pressure of the fuel supplied to the fuel distributing pipe 19 is maintained within a proper pressure range, e.g., 12 MPa to 20 MPa.

As shown in FIG. 1, an exhaust passage 36 for discharging already burned gas (exhaust gas) from the combustion chambers 6 is connected to the side surface of the engine 1 where each exhaust port 11 opens. An upstream end portion of the exhaust passage 36 is structured to form an exhaust manifold 37 which connects to the exhaust ports 11 of the individual cylinders 2. At a joint part of the exhaust manifold 37 where its branched portions join together, there is disposed a linear O₂ sensor 38 for detecting oxygen concentration in the exhaust gas. The linear O₂ sensor 38 is used for detecting the air-fuel ratio based on the oxygen concentration in the exhaust gas. Specifically, the engine is controlled such that engine output varies linearly with the oxygen concentration within a specific range of air-fuel ratio including the stoichiometric air-fuel ratio.

An upstream end of an exhaust pipe 39 is connected to the joint part of the exhaust manifold 37, and a three-way catalyst 54 and a NOx absorber 40 for absorbing nitrogen oxides (NOx) are fitted in the exhaust pipe 39 from upstream side to downstream side thereof. The NOx absorber 40 is of a NOx absorption/reduction type which absorbs NOx under conditions where the oxygen concentration in the exhaust gas is high and releases absorbed NOx when the oxygen concentration in the exhaust gas decreases so that released NOx is cleaned by reduction by hydrocarbons (HC) and carbon monoxide (CO) contained in the exhaust gas.

Referring again to FIG. 1, designated by the numeral 50 is an electronic control unit (ECU) for controlling the ignition circuit 17, the fuel injectors 18, the high-pressure regulator 27 of the fuel supply system 20, the electrically-operated throttle valve 32, an intake airflow control valve (not shown) and an exhaust gas recirculation (EGR) valve (not shown). To enable the ECU 50 to perform this control operation, output signals from at least a crank angle sensor 9 for detecting the angle of rotation of the crankshaft 7 (or engine speed), the airflow sensor 31 and the linear O₂ sensor 38 are input into the ECU 50. In addition, an output signal from an accelerator pedal position sensor 51 for detecting the position (or the amount of depression) of the accelerator pedal is input into the ECU 50.

Based on the signals fed from these sensors, the ECU 50 controls fuel injection timing of the individual fuel injectors 18, the fuel pressure regulated by the high-pressure regulator 27 and combustion conditions which are determined by the fuel injectors 18, the ignition circuit 17 and the high-pressure regulator 27.

### Fuel Injection Control

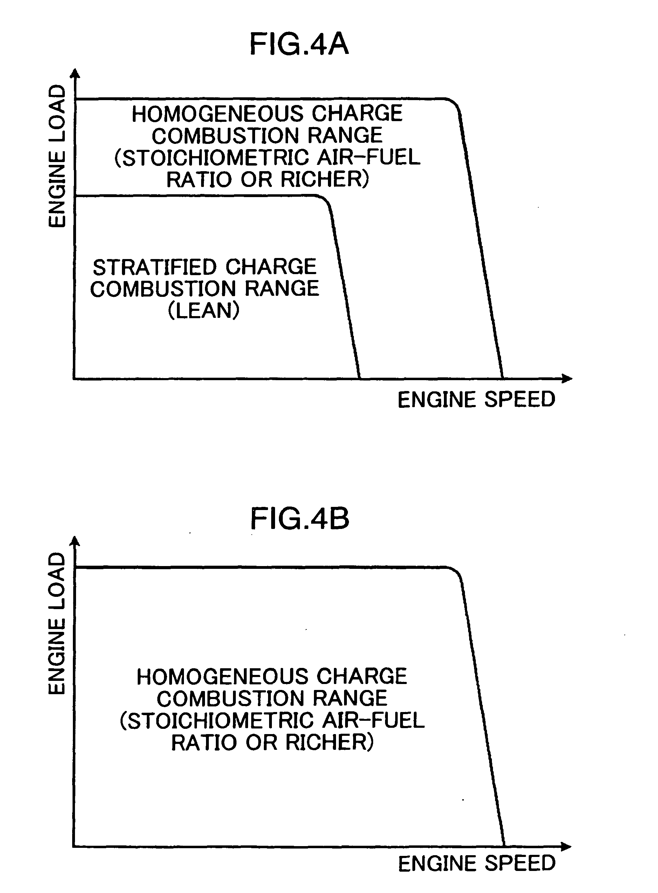

Fuel injection is controlled based on fuel injection control maps which are selectively used according to engine temperature. Specifically, the ECU 50 selects a warm-state fuel injection control map shown in FIG. 4A in a warm operating state in which the engine temperature is equal to or higher than a specified level (e.g., 80°C) and a cold-state fuel injection control map shown in FIG. 4B in a cold operating state in which the engine temperature is lower than the specified level.

When the warm-state fuel injection control map is selected and the engine in the warm operating state is in a low-load, low-speed range, the engine is run in a stratified charge combustion range as shown in FIG. 4A. In the stratified charge combustion range, the ECU 50 controls the fuel injectors 18 in such a way that each fuel injector 18 injects the fuel at a specific fuel injection point in a compression stroke so that the engine produces stratified charge combustion, in which a stratified charge formed of richer and leaner fuel-air mixture layers is locally distributed in the vicinity of the spark plug 16 and burnt in each cylinder 2. If the engine is of a type which performs one-time injection in which the fuel is injected at one point in time in each combustion cycle, the ECU 50 controls the engine such that each fuel injector 18 injects the fuel within a crank angle range of 0° to 60° before top dead center (BTDC) in the compression stroke, for example. In this stratified charge combustion range, the quantity of injected fuel and throttle opening are controlled such that the air-fuel ratio in each cylinder 2 becomes higher than the stoichiometric air-fuel ratio to produce a lean mixture.

Engine operating regions in other than the stratified charge combustion range belong to a homogeneous charge combustion range in which the ECU 50 controls the fuel injectors 18 in such a way that each fuel injector 18 injects the fuel in each successive intake stroke so that the fuel is sufficiently mixed with intake air whereby a homogeneous charge is produced and burnt in each combustion chamber 6. In this case, the quantity of injected fuel and the throttle opening are controlled such that the air-fuel ratio becomes approximately equal to the stoichiometric air-fuel ratio (A/F≈14.7) to produce an ideal fuel-air mixture in each cylinder 2 in most part of the homogeneous charge combustion range, except under full-load operating conditions in which the engine is controlled such that the air-fuel ratio becomes lower than the stoichiometric air-fuel ratio (e.g., A/F=13) to produce a rich mixture and thereby obtain high engine output power corresponding to a high engine load.

When the engine is in the cold operating state and the cold-state fuel injection control map is selected, the engine produces homogeneous charge combustion in all operating regions (homogeneous charge combustion range) as shown in FIG. 4B.

### Fuel Pressure Control

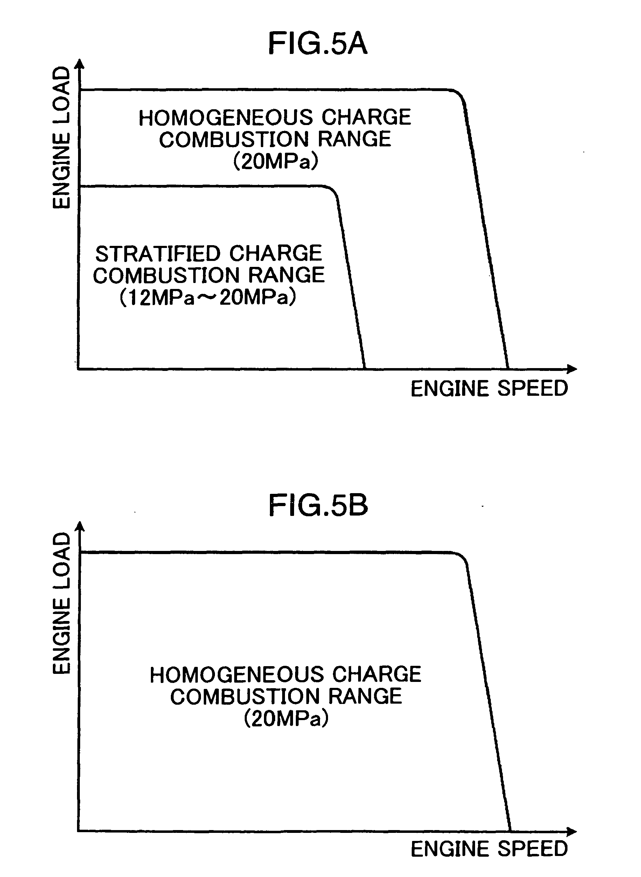

The fuel pressure is controlled based on fuel pressure control maps which are selectively used according to the engine temperature. Specifically, the ECU 50 selects a warm-state fuel pressure control map shown in FIG. 5A in the warm operating state in which the engine temperature is equal to or higher than the specified level (e.g., 80°C) and a cold-state fuel pressure control map shown in FIG. 5B in the cold operating state in which the engine temperature is lower than the specified level.

When the warm-state fuel pressure control map is selected and the engine in the warm operating state is in the stratified charge combustion range, the fuel pressure is varied from 12 MPa to 20 MPa as the engine speed increases as shown in FIG. 5A. At least when the engine is on a high-speed side of the homogeneous charge combustion range, on the other hand, the fuel pressure is constantly maintained at 20 MPa as shown in FIG. 5A.

When the engine is in the cold operating state and the cold-state fuel pressure control map is selected, the fuel pressure is constantly maintained at 20 MPa in all of the operating regions (homogeneous charge combustion range) in which the engine is run by homogeneous charge combustion as shown in FIG. 5B.

As already mentioned, the high-pressure fuel pump 26 is driven by the rotating camshaft. Thus, during a period of engine starting when the revolving speed of the camshaft is low, the fuel pressure does not sufficiently increase but remains at about 0.5 MPa, for example.

Referring now to FIGS. 2, 6 and 7, the arrangement of the 8 spray holes of the multihole fuel injector 18 constituting an main feature of the invention is described.

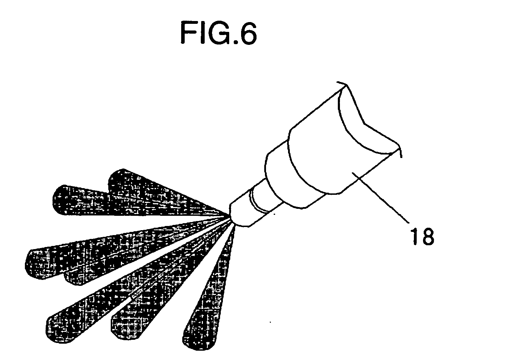

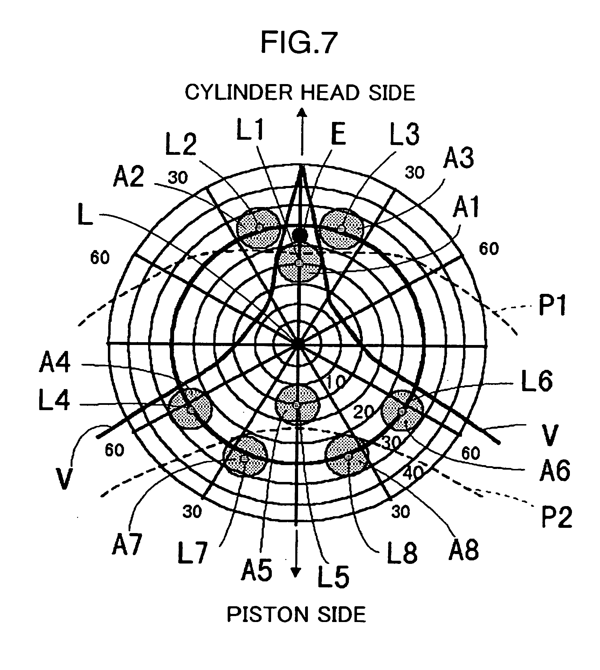

FIG. 6 is a perspective diagram showing how the fuel is sprayed from the spray holes of the multihole fuel injector 18, and FIG. 7 is a diagram schematically showing three-dimensional inclination angles of axes of the individual spray holes with respect to a longitudinal axis of the multihole fuel injector 18 as viewed along the longitudinal axis of the fuel injector 18 in its fuel spraying direction.

Referring to FIG. 7, "L" indicates the longitudinal axis of the multihole fuel injector 18, "V" indicates maximum lift positions of the intake valves 12 (in a case where the maximum lift of each intake valve 12 is 9 mm, for example), "P1" indicates the position of the piston 5 at its top dead center, "P2" indicates the position of the piston 5 at its bottom dead center, "L1" to "L8" indicate the axes of the individual spray holes (the spray holes themselves are not illustrated), "A1" to "A8" represent spray angles of individual spray cones formed by the fuel ejected from the first to eighth spray holes of the fuel injector 18 and "E" indicates the electrode of the spark plug 16.

The spray holes of the fuel injector 18 of this embodiment have a common diameter which is set to 0.15 mm, for example.

As illustrated in FIG. 7, indicated by "L1" is the axis of the spray hole directed to an area located on the underside of the electrode, indicated by "L2" and "L3" are the axes of the spray holes individually directed to areas located on both lateral sides of the electrode, and indicated by "L5" is the axis of the spray hole directed to an area located on the piston side.

The axes L1 to L8 of the first to eighth spray holes have the following inclinations with respect to the longitudinal axis L of the fuel injector 18, the maximum lift position V of each intake valve 12, the top dead center position P1 of the piston 5, the bottom dead center position P2 of the piston 5 and the electrode E of the spark plug 16.

The first spray hole is located and structured such that the axis L1 of the first spray hole is directed to a specific position below the electrode E of the spark plug 16 at an oblique angle to the longitudinal axis L of the fuel injector 18. The axis L1 of the first spray hole and the spray cone with the spray angle A1 are located between the maximum lift positions V of the two intake valves 12, that is, outside a movable range of the intake valves 12.

The second spray hole is located and structured such that the axis L2 of the second spray hole is directed to a specific position on one side (left side as illustrated) of the electrode E at an oblique angle to the longitudinal axis L of the fuel injector 18. The third spray hole is located and structured such that the axis L3 of the third spray hole is directed to a specific position on the opposite side (right side as illustrated) of the electrode E at an oblique angle to the longitudinal axis L of the fuel injector 18.

The axis L2 of the second spray hole, the spray cone with the spray angle A2, the axis L3 of the third spray hole and the spray cone with the spray angle A3 are located within the movable range of the intake valves 12 defined by the maximum lift positions V thereof.

Relative locations and inclinations of the first to third spray holes are arranged as follows. The first spray hole opens such that its axis L1 is directed to the area located immediately below the electrode E of the spark plug 16. The second and third spray holes open such that their axes L2, L3 are directed to the areas located on both sides of the axis L1, symmetrically on the left and right sides. Therefore, the angle between the axes L2 and L3 of the second and third spray holes is larger than the angle between the axes L1 and L2 (or L3) of the first and second (or third) spray holes.

The fourth spray hole is located and structured such that the axis L4 of the fourth spray hole is directed to a specific position on the piston side (lower side as illustrated) of the longitudinal axis L of the fuel injector 18 above the bottom dead center position P2 of the piston 5 (left side as illustrated).

The fifth spray hole is located and structured such that the axis L5 of the fifth spray hole is directed to a specific position on the piston side (lower side as illustrated) of the longitudinal axis L of the fuel injector 18 above the bottom dead center position P2 of the piston 5 (central position as illustrated).

The sixth spray hole is located and structured such that the axis L6 of the sixth spray hole is directed to a specific position on the piston side (lower side as illustrated) of the longitudinal axis L of the fuel injector 18 above the bottom dead center position P2 of the piston 5 (right side as illustrated).

The seventh spray hole is located and structured such that the axis L7 of the seventh spray hole is directed to a specific position on the piston side (lower side as illustrated) of the longitudinal axis L of the fuel injector 18 below the bottom dead center position P2 of the piston 5 (left side as illustrated).

The eighth spray hole is located and structured such that the axis L8 of the eighth spray hole is directed to a specific position on the piston side (lower side as illustrated) of the longitudinal axis L of the fuel injector 18 below the bottom dead center position P2 of the piston 5 (right side as illustrated).

The axes L3 to L8 of the third to eighth spray holes and the spray cones with the spray angles A3 to A8 are located outside the movable range of the intake valves 12.

The fuel sprays ejected from the 8 spray holes together constitute a cluster of fuel mist streams embraced within a cone of which apex lies on the longitudinal axis L of the fuel injector 18 with a sectional fanning angle of 70° or less. FIG. 6 shows an example of the fuel spray cluster formed by the fuel injector 18 of which spray hole design and spray angle are determined as explained above.

As thus far discussed, the axes L1 to L3 of the first to third spray holes are arranged such that the fuel sprays ejected from these spray holes are directed to the areas below and on both lateral sides of the electrode of the spark plug 16. With this geometry of the spray holes, it is possible to gather atomized mixture masses in the vicinity of the electrode and thereby enhance ignitability of the mixture in stratified charge combustion.

Furthermore, since the axes L4 to L8 of the fourth to eighth spray holes are positioned on the piston side of the axis L of the fuel injector 18, it is possible to produce a mixture uniformly distributed in the entire combustion chamber 6. This serves to ensure homogeneousness of the mixture when the engine 1 is run by the homogeneous charge combustion.

The axes L1 and L4 to L8 of the first and fourth to eighth spray holes are located outside the movable range of the intake valves 12. Since most of the spray holes are located outside the movable range of the intake valves 12 despite the multihole design of fuel injector 18, it is possible to prevent the fuel sprays ejected from these spray holes from striking the intake valves 12.

The axes L1 to L3 of the first to third spray holes in the fuel injector 18 directed to the areas in the vicinity of the electrode of the spark plug 16 must satisfy the following geometrical requirements.

During a period when the engine is run by the stratified charge combustion in the warm operating state, it is necessary to produce the aforementioned mutual interference effect among the individual fuel sprays to gather the atomized mixture masses in the vicinity of the electrode of the spark plug 16. If the mutual interference effect occurs during cold engine starting, however, dense mixture droplets adhere to the electrode of the spark plug 16, causing deterioration of engine startup performance, so that another requirement is to prevent the occurrence of the mutual interference effect at cold engine starting.

The mutual interference effect occurring among the fuel sprays is affected by spray angle α of a fuel spray which is subject to the influence of fuel pressure and in-cylinder pressure. A mist of fuel injected into a cylinder evaporates as a result of friction between fuel droplets and air in the cylinder occurring when the fuel is injected into the cylinder and the evaporated fuel spreads outward, so that the spray angle α increases with the lapse of time after injection. This increase in the spray angle α, or the spreading of the fuel spray, becomes greater with increases in the fuel pressure and in-cylinder pressure due to increasing friction forces.

More particularly, when the engine is run by the stratified charge combustion in the warm operating state, the fuel pressure is set to a high level suited for the stratified charge combustion and the fuel injection point is set within the compression stroke so that the in-cylinder pressure is high at the fuel injection point. Since both the fuel pressure and the in-cylinder pressure are high in this situation, the spray angle α is large when the engine is in the warm operating state.

During a period when the engine is run by the homogeneous (unstratified) charge combustion in the cold operating state, and in particular at cold engine starting, on the other hand, the fuel pressure increases with some delay due to a delay in actuation of the engine-driven high-pressure fuel pump. Thus, the fuel pressure stays at a low level for a while after engine start and the in-cylinder pressure is low at the fuel injection point because the fuel injection point is set within the intake stroke. Consequently, both the fuel pressure and the in-cylinder pressure are low, and the spray angle α is small.

Under such circumstances, the axes L1 to L3 of the first to third spray holes directed to the surrounding areas of the electrode of the spark plug 16 are arranged such that the following relationship is established among the spray angle α of the fuel ejected from those spray holes and the angle θ between the adjacent axes of the spray holes.

The fuel injector 18 of this embodiment is structured such that the angle θ between the axes of the adjacent spray holes falls within a range of 15° to 25° (e.g., 20°) while the spray angle α varies with changes in the fuel pressure and the in-cylinder pressure and, thus, the relationship between the spray angle α and the angle θ varies accordingly.

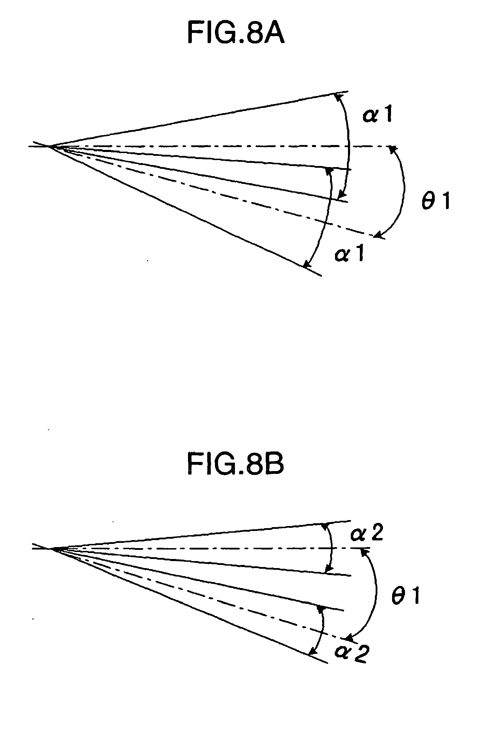

If the fuel pressure is 12 MPa and the in-cylinder pressure is 1 MPa, for example, when the engine is run by the stratified charge combustion in the warm operating state, the spray angle α1 of the fuel ejected from each of the first to third spray holes increases and the spray angle α1 becomes larger than the angle θ1 between the axes L1 and L2 of the first and second spray holes and between the axes L1 and L3 of the first and third spray holes as shown in FIG. 8A.

As a consequence, the spray cones having the spray angle α1 ejected from the first and second spray holes become closer to each other, as do the spray cones having the spray angle α1 ejected from the first and third spray holes. In this situation, the mutual interference effect occurs between the fuel sprays ejected from the first and second spray holes and between the fuel sprays ejected from the first and third spray holes. This mutual interference effect causes the fuel spray ejected from the first spray hole to be drawn toward the fuel sprays ejected from the second and third spray holes. Since the axes L2 and L3 of the second and third spray holes are symmetrically situated with respect to the axis L1 of the first spray hole, the fuel sprays ejected from the first to third spray holes are together brought closer to the electrode of the spark plug 16. A reason why the spray angle α1 enlarges in the warm operating state is that both the fuel pressure and the in-cylinder pressure are high, so that the friction between fuel droplets and air in the cylinder 2 is large and the evaporated fuel spreads outward when the engine is warm.

If the fuel pressure is 0.5 MPa and the in-cylinder pressure is 0.1 MPa, for example, when the engine is run by the homogeneous charge combustion at cold engine starting, the spray angle α2 of the fuel ejected from each of the first to third spray holes decreases and the spray angle α2 becomes smaller than the angle θ1 between the axes L1 and L2 of the first and second spray holes and between the axes L1 and L3 of the first and third spray holes as shown in FIG. 8B.

As a consequence, the spray cones having the spray angle α2 ejected from the first and second spray holes are separated from each other, as do the spray cones having the spray angle α2 ejected from the first and third spray holes. In this situation, the mutual interference effect does not occur between the fuel sprays ejected from the first and second spray holes or between the fuel sprays ejected from the first and third spray holes. A reason why the spray angle α2 decreases at cold engine starting is that both the fuel pressure and the in-cylinder pressure are low, so that the friction between fuel droplets and air in the cylinder 2 is small and the evaporated fuel does not spread outward so much when the engine is cold.

The axis L5 of the fifth spray hole in the fuel injector 18 located below the axis L1 of the first spray hole must satisfy the following geometrical requirements with respect to the axis L1 of the first spray hole.

To ensure ignitability in the stratified charge combustion range, it is necessary that the axis L1 of the first spray hole be directed to an area close to the electrode E of the spark plug 16. If the fifth spray hole is too close to the first spray hole, however, there occurs the mutual interference effect between the fuel sprays ejected from the first and fifth spray holes and, as a consequence, the fuel spray ejected from the first spray hole is drawn toward the fuel spray ejected from the fifth spray hole. Should this situation occur, it becomes impossible to gather mixture masses in the vicinity of the electrode E of the spark plug 16.

To avoid this problem, the axes L1 and L5 of the first and fifth spray holes are arranged such that the following relationship is established between the spray angle α of the fuel ejected from each of the first and fifth spray holes and the angle θ between the axes L1 and L5 of the first and fifth spray holes.

The angle θ between the axes L1 and L5 is preset to approximately 35°, for example, while the spray angle α varies with changes in the fuel pressure and the in-cylinder pressure and, thus, the relationship between the spray angle α and the angle θ varies accordingly.

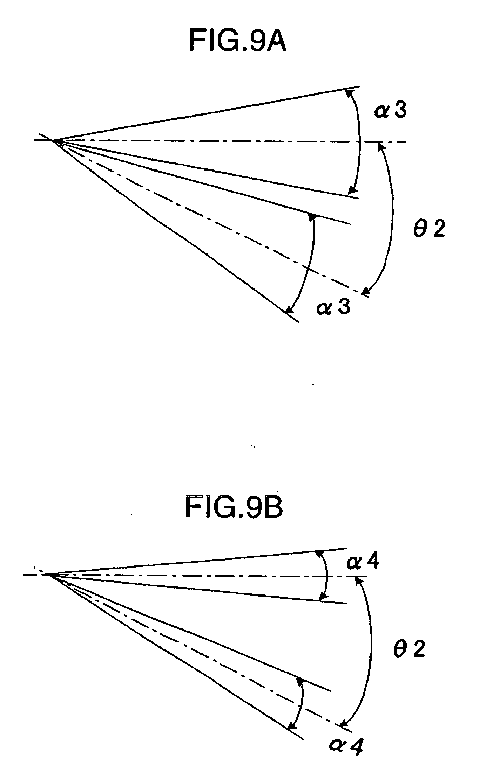

If the fuel pressure is 12 MPa and the in-cylinder pressure is 1 MPa, for example, when the engine is run by the stratified charge combustion in the warm operating state, the spray angle α3 of the fuel ejected from both the first and fifth spray holes increases but the spray angle α3 is smaller than the angle θ2 between the axes L1 and L5 of the first and fifth spray holes as shown in FIG. 9A.

As a consequence, the spray cones having the spray angle α3 ejected from the first and fifth spray holes are separated from each other so that the mutual interference effect does not occur between the fuel sprays ejected from the first and fifth spray holes.

If the fuel pressure is 0.5 MPa and the in-cylinder pressure is 0.1 MPa, for example, when the engine is run by the homogeneous charge combustion at cold engine starting, the spray angle α4 of the fuel ejected from each of the first and fifth spray holes becomes still smaller than the spray angle α3 in the warm operating state. Thus, as in the case of the warm operating state, the spray angle α4 is smaller than the angle θ2 between the axes L1 and L5 of the first and fifth spray holes as shown in FIG. 9B.

As a consequence, the spray cones having the spray angle α4 ejected from the first and fifth spray holes are separated from each other so that the mutual interference effect does not occur between the fuel sprays ejected from the first and fifth spray holes.

The aforementioned relationship is established between the spray angle α3, α4 of the fuel ejected from each of the first and fifth spray holes and the angle θ2 between the axes L1 and L5 of the first and fifth spray holes so that the mutual interference effect does not occur between the adjacent fuel sprays as discussed above when the engine is run either by the stratified charge combustion in the warm operating state or by the homogeneous charge combustion at cold engine starting.

Reasons why the angle θ is set within the range of 15° to 25° are as follows.

If the angle θ between the axes of the adjacent spray holes is too small, the volume of air held in the space between the adjacent fuel sprays decreases and a greater mutual interference effect acts on the adjacent fuel sprays, causing penetration L of the fuel sprays to become excessively large. As a result, there arises a problem that the fuel sprays ejected from the individual spray holes just passes close to the electrode E of the spark plug 16 and it is not possible to gather mixture masses in the vicinity of the electrode E.

If the angle θ is too large, on the contrary, there arises a problem that the individual fuel sprays become separated too far from one another so that the mutual interference effect does not occur between the adjacent fuel sprays.

The inventors have verified through analysis and experiments that such problems can be avoided if the angle θ between the axes of the adjacent spray holes is set within the range of 15° to 25° when the diameter of the individual spray holes in the fuel injector 18 is 0.15 mm and the fuel pressure is 20 MPa.

In this embodiment, the distance from each of the first to third spray holes of the fuel injector 18 to the electrode E of the spark plug 16 is set to 20 mm or more.

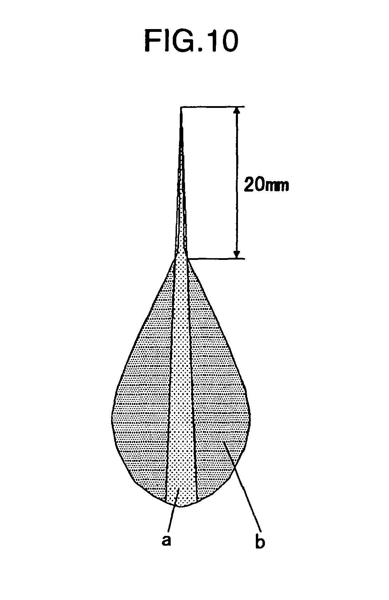

Reasons why the aforementioned geometrical structure is employed in the present embodiment are now discussed with reference to FIG. 10.

The fuel spray ejected from any single spray hole of the fuel injector 18 includes a central spray region designated "a" located along a longitudinal axis of the fuel spray where unatomized liquid fuel particles exist and a peripheral spray region designated "b" where an atomized fuel mist exists surrounding the central spray region "a".

Typically, a stream of fuel ejected from the spray hole gradually spreads in a generally conical shape and the fuel is gradually atomized from a distance of about 20 mm from the spray hole, forming the aforementioned peripheral spray region "b", as illustrated in FIG. 10. In other words, the fuel is scarcely atomized within a range of 20 mm from the spray hole.

If the electrode E of the spark plug 16 is located within the central spray region "a" of the fuel spray, the electrode E becomes wet with the liquid fuel droplets and loses the ability to ignite the fuel mist. It is therefore essential that the electrode E of the spark plug 16 be located within the peripheral spray region "b" surrounding the central spray region "a". It will be understood from the foregoing that the electrode E of the spark plug 16 must be located within the peripheral spray region "b" at least 20 mm from the spray hole.

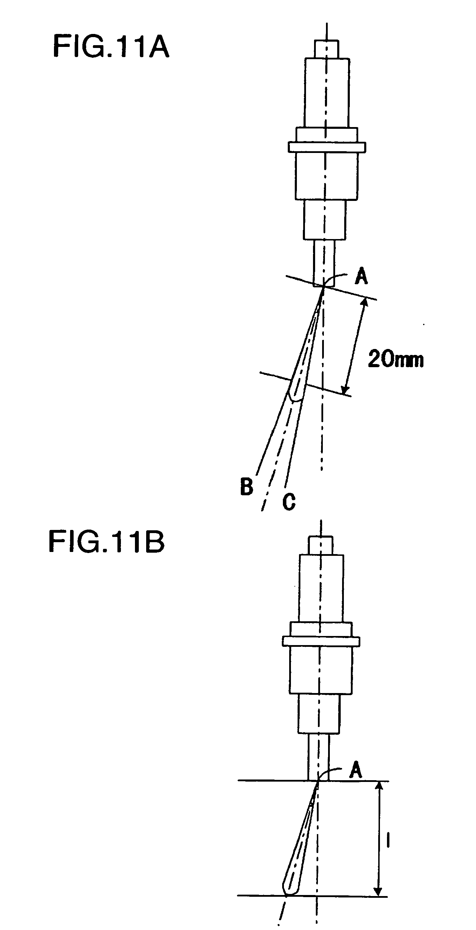

More specific definitions of the aforementioned spray angle α and penetration L are given below with reference to FIGS. 11A and 11B.

The spray angle α is the angle of a geometrical fuel spray area of a spray cone formed by any of the spray holes of the fuel injector 18. More particularly, the geometrical fuel spray area is an area of liquid droplets in the single fuel spray formed under conditions where there is no intake air flow in the combustion chamber 6.

Now, the spray angle α and the spray penetration L are explained in further detail with reference to specific examples.

As shown in the example of FIG. 11A, two points B, C are taken on a pair of straight lines along which an imaginary plane including the longitudinal axis of the fuel spray intersects the conical surface of the generally cone-shaped fuel spray at a distance of more than 20 mm downstream of a point A where a spray hole of the fuel injector 18 is located. The spray angle α of the fuel spray is the angle ∠BAC defined by the three points B, A, C. Thus, the spray angle α=∠BAC.

Also, the spray penetration L is defined as the distance between the point A and an extreme end of the fuel spray as measured in the direction of the longitudinal axis of the fuel injector 18 as shown in the example of FIG. 11B.

In practice, the spray angle α and the spray penetration L may be measured by using the laser sheet method, for instance.

In measurement by the laser sheet method, a fluid specimen known as Dry Solvelt having properties equivalent to those of the fuel actually sprayed from the fuel injector 18 is used. This fluid specimen (Dry Solvelt) is used at a specific pressure level (e.g., 12 MPa) within an actual fuel pressure range under normal temperature conditions. To create a realistic atmosphere, the interior of a pressure vessel having a laser sheet window and a measurement window, through which the fuel spray can be photographed, is pressurized to 0.5 MPa, for example. Then, under the normal temperature conditions, the fuel injector 18 is controlled to inject the fluid specimen (fuel) at a rate of 9 mm³ per stroke (or per pulse) by feeding a driving pulse signal having a specific pulsewidth. While an imitated "fuel" spray is produced in this way, a 5 mm-thick laser sheet is projected so that it passes along the longitudinal axis of the fuel spray, and a profile of the fuel spray is photographed from a direction perpendicular to the plane of the laser sheet by using a high-speed camera. The spray angle α and the spray penetration L as defined above are determined from an on-screen shot taken 1.56 ms after a point in time when the aforementioned driving pulse signal was input.

A spray contour observed on a photographed image is the contour of an area of particles of the specimen in a liquid droplet form. As the area of the specimen particles is illuminated by the laser sheet, the spray contour is derived from high-brilliance regions of the photographed image.

According to the embodiment thus far described, the angle θ between the axes L1 and L2 of the first and second spray holes and between the axes L1 and L3 of the first and third spray holes is made equal to or less than the spray angle α of the fuel injected from the individual spray holes when the engine is in the warm operating state in which both the fuel pressure and the in-cylinder pressure are high and the spray angle α tends to increase. Therefore, the volume of air held in the space between the fuel sprays having the spray angle α ejected from the first and second spray holes and the volume of air held in the space between the fuel sprays having the spray angle α ejected from the first and third spray holes decrease so that the aforementioned mutual interference effect is exerted between the adjacent fuel sprays. The aforementioned structure of the present embodiment serves to provide enhanced ignitability of the mixture.

When the engine is in the cold operating state in which both the fuel pressure and the in-cylinder pressure are low and the spray angle α tends to increase, the aforementioned angle θ is made larger than the aforementioned spray angle α. Therefore, the volume of air held in the space between the fuel sprays having the spray angle α ejected from the first and second spray holes and the volume of air held in the space between the fuel sprays having the spray angle α ejected from the first and third spray holes increase, making it possible to suppress the aforementioned mutual interference effect. Consequently, it is possible to prevent deterioration of the ignitability due to adhesion of a great deal of fine mixture droplets to the electrode E of the spark plug 16.

Since the fourth to eighth spray holes are located outside the movable range of the intake valves 12 as stated earlier, it is possible to gather mixture masses around the electrode E of the spark plug 16 while preventing the fuel sprays ejected from these spray holes from striking the intake valves 12. This also makes it possible to enhance the ignitability.

Furthermore, because the angle θ between the axes L1 and L2 of the first and second spray holes and between the axes L1 and L3 of the first and third spray holes is set within the range of 15° to 25° as stated above, it is possible to properly produce the aforementioned mutual interference effect between the adjacent fuel sprays while preventing the mutual interference effect from becoming excessively strong. This also makes it possible to enhance the ignitability.

Furthermore, since the distance from each of the first to third spray holes of the fuel injector 18 to the electrode E of the spark plug 16 is set to 20 mm or more, it is possible to produce the mutual interference effect in a reliable fashion. This also makes it possible to enhance the ignitability. Additionally, this structure makes it possible to position the electrode E of the spark plug 16 within the peripheral spray region "b" in which an atomized fuel mist is distributed and to prevent adhesion of unatomized fuel particles to the electrode E of the spark plug 16.

Moreover, since the angle θ between the axes L1 and L5 of the first and fifth spray holes is made larger than the spray angle α of the fuel spray ejected from each of the first and fifth spray holes when the engine is run by the stratified charge combustion, the volume of air held in the space between the fuel sprays having the spray angle α ejected from the first and fifth spray holes increases. It is therefore possible to suppress mutual interference between the two fuel sprays. Consequently, it is possible to prevent the fuel spray ejected from the first spray hole from being drawn toward the axis L5 of the fifth spray hole and thereby gather atomized mixture masses in the vicinity of the electrode E of the spark plug 16. When the engine is run by the homogeneous charge combustion, it is possible to distribute mixture masses in the entire combustion chamber 6, producing a homogeneous mixture therein, because the fuel is injected not only from the first to third spray holes but also from the fourth to eighth spray holes located on the piston side.

While the first embodiment of the invention has been described, by way of example, with reference to the multihole injector 18 having eight spray holes, the structure of the embodiment is also applicable to other types of multihole injectors having more or less than eight spray holes.

### SECOND EMBODIMENT

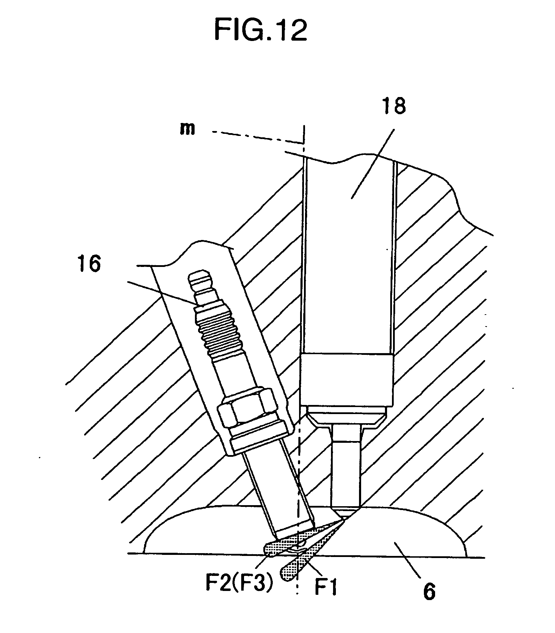

A second embodiment of the invention is now described with reference to FIGS. 12, 13, 14A and 14B.

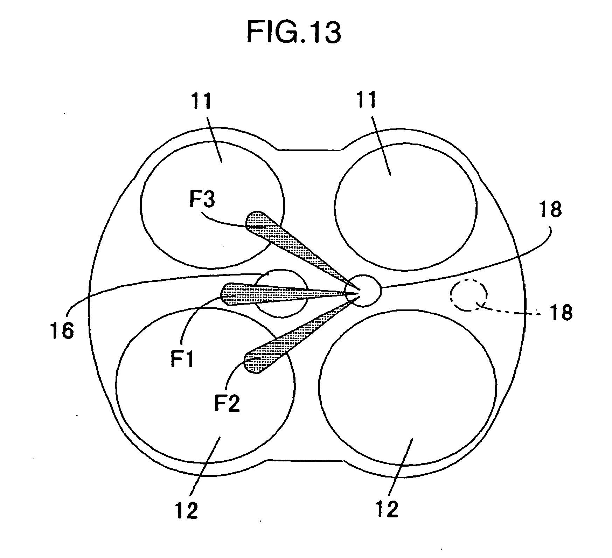

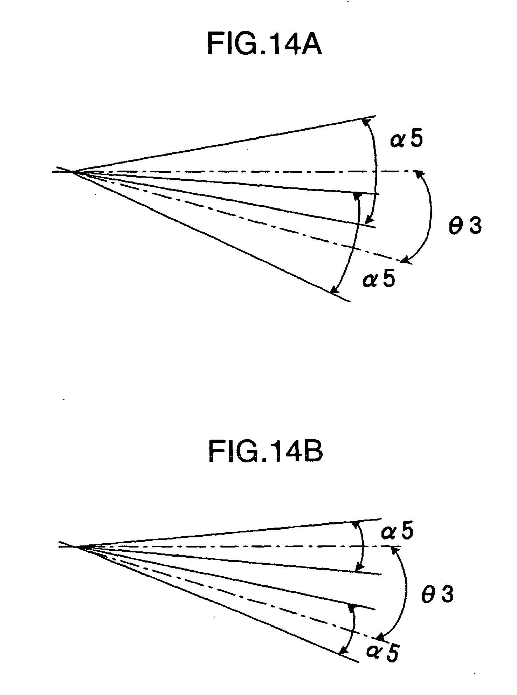

FIG. 12 is a cross-sectional diagram showing part of a cylinder head according to the second embodiment, FIG. 13 is a plan view of the cylinder head according to the second embodiment, FIG. 14A is a diagram showing the relationship between the spray angle of fuel ejected from each of first to third spray holes of a fuel injector of the second embodiment and the angle between the axes of the first and second spray holes and between the axes of the first and third spray holes under warm-running conditions, and FIG. 14B is a diagram showing the relationship between the spray angle of fuel ejected from each of the first to third spray holes of the fuel injector of the second embodiment and the angle between the axes of the first and second spray holes and between the axes of the first and third spray holes at cold engine starting.

While the foregoing discussion of the first embodiment has illustrated an example wherein the invention is applied to the side injection type spark-ignition direct-injection engine 1 in which a nozzle tip of each fuel injector 18 is located at a peripheral part of the combustion chamber 6, the second embodiment discussed below shows an example wherein the invention is applied to a center injection type spark-ignition direct-injection engine 1 in which the nozzle tip of each fuel injector 18 is located approximately at the center of a combustion chamber 6.

Referring to FIGS. 12 and 13, a spark plug 16 is obliquely fitted approximately at the center of the combustion chamber 6 at a specific angle with respect to a longitudinal axis m of a cylinder 2, while the fuel injector 18 is fitted approximately parallel to the axis m of the cylinder 2 approximately at the center of the combustion chamber 6. The fuel injector 18 of this embodiment is a multihole injector having three spray holes which are hereinafter referred to as the first to third spray holes.

A Fuel spray F1 ejected from the first spray hole is directed to an area located on the underside of an electrode E of the spark plug 16 and fuel sprays F2, F3 ejected from the second and third spray holes are individually directed to areas located on both lateral sides of the electrode E of the spark plug 16. This means that the axis of the first spray hole is directed to the underside of the electrode E and the axes of the second and third spray holes are individually directed to both lateral sides of the electrode E.

The first to third spray holes are so structured that the following relationship is established among the spray angle α of the fuel ejected from those spray holes and the angle θ between the adjacent axes of the spray holes in a manner similar to the case of the first embodiment (FIGS. 8A, 8B).

If the fuel pressure is 10 MPa and the in-cylinder pressure is 1 MPa, for example, when the engine is run by the stratified charge combustion in the warm operating state, the spray angle α5 of the fuel ejected from each of the first to third spray holes increases and the spray angle α5 becomes larger than the angle θ3 between the axes L1 and L2 of the first and second spray holes and between the axes L1 and L3 of the first and third spray holes as shown in FIG. 14A.

As a consequence, the spray cones having the spray angle α5 ejected from the first and second spray holes become closer to each other, as do the spray cones having the spray angle α5 ejected from the first and third spray holes.

If the fuel pressure is 0.5 MPa and the in-cylinder pressure is 0.1 MPa, for example, when the engine is run by the homogeneous charge combustion, the spray angle α5 of the fuel ejected from each of the first to third spray holes decreases and the spray angle α5 becomes smaller than the angle θ3 between the axes L1 and L2 of the first and second spray holes and between the axes L1 and L3 of the first and third spray holes as shown in FIG. 14B.

As a consequence, the spray cones having the spray angle α5 ejected from the first and second spray holes are separated from each other, as do the spray cones having the spray angle α5 ejected from the first and third spray holes. In this situation, the aforementioned mutual interference effect does not occur between the fuel sprays ejected from the first and second spray holes or between the fuel sprays ejected from the first and third spray holes.

According to the second embodiment thus far described, the angle θ between the axes L1 and L2 of the first and second spray holes and between the axes L1 and L3 of the first and third spray holes is made equal to or less than the spray angle α of the fuel injected from the individual spray holes when the engine is in the warm operating state in which both the fuel pressure and the in-cylinder pressure are high and the spray angle α tends to increase as in the first embodiment. Therefore, the volume of air held in the space between the fuel sprays having the spray angle α ejected from the first and second spray holes and the volume of air held in the space between the fuel sprays having the spray angle α ejected from the first and third spray holes decrease so that the aforementioned mutual interference effect is exerted between the adjacent fuel sprays. The aforementioned structure of the second embodiment serves to provide enhanced ignitability of the mixture.

When the engine is in the cold operating state in which both the fuel pressure and the in-cylinder pressure are low and the spray angle α tends to increase, the aforementioned angle θ is made larger than the aforementioned spray angle α. Therefore, the volume of air held in the space between the fuel sprays having the spray angle α ejected from the first and second spray holes and the volume of air held in the space between the fuel sprays having the spray angle α ejected from the first and third spray holes increase, making it possible to suppress the aforementioned mutual interference effect. Consequently, it is possible to prevent deterioration of the ignitability due to adhesion of a great deal of mixture droplets to the electrode E of the spark plug 16.

While the foregoing discussion of the second embodiment has illustrated an example in which the fuel injector 18 is located approximately at the center of the combustion chamber 6, the embodiment may be modified such that the fuel injector 18 is installed in a vertical position close to the periphery of the combustion chamber 6 as shown by an alternate long and two short dashed line in FIG. 13.

Also, although the fuel injector 18 of the foregoing second embodiment is a multihole injector having three spray holes, the aforementioned structure of the embodiment is also applicable to a multihole injector having four or more spray holes cable of dispersing the mixture within the combustion chamber 6.

### THIRD EMBODIMENT

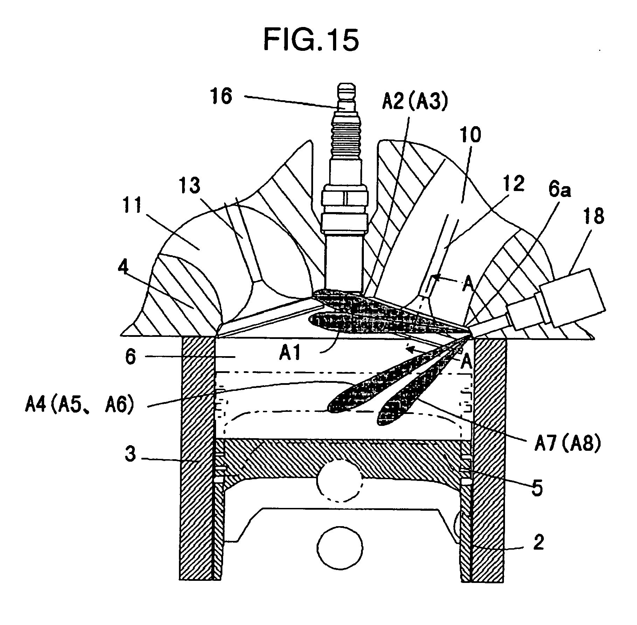

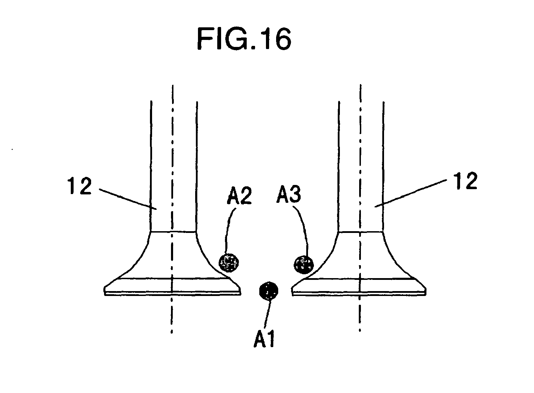

A third embodiment of the invention is now described with reference to FIGS. 15 and 16.

FIG. 15 is a vertical cross-sectional diagram showing part of a cylinder head 4 and one of cylinders 2 of a spark-ignition direct-injection engine 1 with a piston 5 located at the bottom dead center according to the third embodiment, and FIG. 16 is a diagram as viewed along arrows A-A of FIG. 15.

The direct-injection engine 1 of the third embodiment is a modified version of the engine 1 of the first embodiment, in which fuel injection timing and fuel spraying directions are restricted to prevent the injected fuel from striking a pair of intake valves 12 so that the fuel is efficiently mixed with intake air when the engine is run by the homogeneous charge combustion, and not by the stratified charge combustion.

According to the third embodiment, each of fuel injectors 18 sprays the fuel in a middle part of the intake stroke. Specifically, the fuel injector 18 injects the fuel during a period at around a crank angle between 100° and 120° after the intake stroke top dead center, for example, during which the intake valves 12 reach the maximum lift positions. More specifically, the fuel injector 18 injects the fuel during a period corresponding to a crank angle range of 60° to 150° after the intake stroke top dead center, for example, during which the lift of the intake valves 12 is 3/4 of the maximum lift or larger.

As is the case with the first embodiment, the first spray hole is located and structured such that the axis L1 of the first spray hole is directed to a specific position below the electrode E of the spark plug 16 at an oblique angle to the longitudinal axis L of the fuel injector 18. The axis L1 of the first spray hole and the spray cone with the spray angle A1 are located between the maximum lift positions V of the two intake valves 12, that is, outside the movable range of the intake valves 12 as depicted in FIG. 16.

The second and third spray holes are located and structured such that the axes L2 and L3 of the second and third spray holes are directed to specific positions on both lateral sides (left and right sides as illustrated) of the electrode E of the spark plug 16 at an oblique angle to the longitudinal axis L of the fuel injector 18. The axis L2 of the second spray hole, the spray cone with the spray angle A2, the axis L3 of the third spray hole and the spray cone with the spray angle A3 are located within the movable range of the intake valves 12 defined by the maximum lift positions V thereof.

The spray cone with the spray angle A2 ejected from the second spray hole and the spray cone with the spray angle A3 ejected from the third spray hole are located above umbrellalike valve elements of the intake valves 12 as shown in FIG. 16 in the middle part of the intake stroke during which the lift of the intake valves 12 increases. The spray angles A2, A3 of fuel sprays ejected from the second and third spray holes are determined such that an upper part of a cone-shaped boundary surface of each fuel spray becomes generally parallel to an intake side sloping surface 6a of the pent-roof combustion chamber 6 as shown in FIG. 15 when the fuel sprays ejected from the second and third spray holes are located above the valve elements of the intake valves 12. Also, the locations of the axes L1 to L3 of the first to third spray holes and the spray cones with the spray angles A1 to A3 are so determined that the axes L1 to L3 and the spray cones are directed to areas above the top surface of the piston 5 even when the piston 5 is at the top dead center position shown by an alternate long and two short dashed line in FIG. 15.

As will be recognized from the foregoing discussion, the third embodiment makes it possible to achieve the same advantageous effects as the first embodiment and to prevent the fuel sprays ejected from the second and third spray holes from striking the intake valves 12 since the spray cones with the spray angles A2, A3 ejected from the second and third spray holes are located above the intake valves 12 in the middle part of the intake stroke during which the lift of the intake valves 12 increases.

Furthermore, since the upper parts of the boundary surfaces of the spray cones with the spray angles A2, A3 ejected from the second and third spray holes become generally parallel to the intake side sloping surface 6a of the combustion chamber 6, it is possible to prevent the fuel sprays from striking the intake side sloping surface 6a of the combustion chamber 6.

Moreover, it is possible to prevent the fuel sprays ejected from the first to third spray holes from striking the top surface of the piston 5, because the locations of the axes L1 to L3 of the first to third spray holes and the spray cones with the spray angles A1 to A3 are determined such that the axes L1 to L3 and the spray cones are directed to the areas above the top surface of the piston 5 even when the piston 5 is at the top dead center position as stated above.

As thus far discussed, the aforementioned structure of the third embodiment makes it possible to effectively prevent the fuel sprays from striking the intake valves 12 and the piston 5 so that the fuel is efficiently mixed with intake air and an improved homogeneous mixture is produced. Particularly because the fuel is injected in the middle part of the intake stroke when the intake air is drawn at a high flow velocity, the third embodiment allows for effective mixing of the fuel and the intake air and improved homogenization of the mixture.

## Claims

1. A spark-ignition direct-injection engine comprising:
a spark plug (16) mounted in said engine with an electrode of the spark plug (16) extending into a combustion chamber (6) formed in a cylinder (2);
a fuel injector (18) for injecting fuel into the combustion chamber (6), a fuel spraying direction in which the fuel injector (18) injects the fuel being directed toward the vicinity of the electrode of the spark plug (16); and
a fuel injection timing controller for setting a fuel injection point of the fuel injector (18) in a compression stroke when the engine is run by stratified charge combustion and in an intake stroke when the engine is run by homogeneous charge combustion; **characterised in that:**
the fuel injector (18) has an electrode bottom-side spray hole of which axis is directed to an area immediately on the underside of the electrode of the spark plug (16) and a piston-side spray hole of which axis is directed to an area further on the underside of the area to which the axis of the electrode bottom-side spray hole is directed as viewed from the fuel injector (18) in the fuel spraying direction, a fuel spray ejected from each of the spray holes having a spray angle, and wherein the electrode bottom-side spray hole and the piston-side spray hole are arranged such that the angle between the axes of the electrode bottom-side spray hole and the piston-side spray hole is larger than the spray angle of the fuel ejected from each of the two spray holes when the engine is run by the stratified charge combustion.

2. The spark-ignition direct-injection engine according to claim 1, wherein the cylinder (2) is provided with two intake valves (12), a nozzle tip of the fuel injector (18) is located between the two intake valves (12), and said two spray holes are located outside a movable range of the two intake valves (12) as viewed along a longitudinal axis of the fuel injector (18) in the fuel spraying direction.

3. The spark-ignition direct-injection engine according to claim 2, wherein the fuel injector (18) has a plurality of piston-side spray holes located adjacent to each other, the piston-side spray holes individually having own axes, and wherein the angle between the axes of the electrode bottom-side spray hole and any of the piston-side spray holes adjacent to the electrode bottom-side spray hole is larger than the angle between the axes of the adjacent piston-side spray holes.

4. The spark-ignition direct-injection engine according to one of claims 1 to 3, wherein the angle between the axes of the electrode bottom-side spray hole and any of the piston-side spray holes is made at least 25° large.

5. The spark-ignition direct-injection engine according to one of claims 1 to 4, wherein the fuel injector (18) further has at least one side-of-the-electrode spray hole of which axis is directed to an area located on a lateral side of the electrode of the spark plug (16) as viewed from the fuel injector (18) in the fuel spraying direction, and wherein the angle between the axes of the electrode bottom-side spray hole and the piston-side spray hole is larger than the angle between the axes of the electrode bottom-side spray hole and the side-of-the-electrode spray hole.

6. The spark-ignition direct-injection engine according to claim 5 further comprising:
a fuel pressure controller for setting the pressure applied to the fuel supplied to the fuel injector (18) to a level suited for the stratified charge combustion when the engine is run by the stratified charge combustion;
wherein the electrode bottom-side spray hole and the side-of-the-electrode spray hole are arranged such that the angle between the axes of the electrode bottom-side spray hole and the side-of-the-electrode spray hole becomes equal to or smaller than the spray angle of the fuel ejected from each of the electrode bottom-side spray hole and the side-of-the-electrode spray hole when the engine is run by the stratified charge combustion.

7. The spark-ignition direct-injection engine according to one of the preceding claims further comprising:
a fuel pressure regulator which regulates the pressure applied to the fuel supplied to the fuel injector (18) when the engine is in a warm operating state to a level higher than a fuel pressure applied at cold engine starting;
wherein the fuel injection timing controller sets the fuel injection point of the fuel injector (18) to a point suited for the homogeneous charge combustion when the engine is in a cold operating state in which engine temperature is lower than a specified level and to a point suited for the stratified charge combustion at least in a part-load range when the engine is in the warm operating state in which the engine temperature is equal to or higher than the specified level;
wherein the fuel injector (18) further has at least one side-of-the-electrode spray hole of which axis is directed to an area located on a lateral side of the electrode of the spark plug (16) as viewed from the fuel injector (18) in the fuel spraying direction; and
wherein the electrode bottom-side spray hole and the side-of-the-electrode spray hole are arranged such that the angle between the axes of the electrode bottom-side spray hole and the side-of-the-electrode spray hole becomes equal to or smaller than the spray angle of the fuel ejected from each of the electrode bottom-side spray hole and the side-of-the-electrode spray hole under the fuel pressure regulated by the fuel pressure regulator when the engine is in the warm operating state in which the fuel injection point of the fuel injector (18) is set to the point suited for the homogeneous charge combustion, and such that the angle between the axes of the electrode bottom-side spray hole and the side-of-the-electrode spray hole becomes larger than the spray angle of the fuel ejected from each of the electrode bottom-side spray hole and the side-of-the-electrode spray hole under the fuel pressure regulated by the fuel pressure regulator when the engine is in the cold operating state.

8. The spark-ignition direct-injection engine according to claim 7, wherein the cylinder (2) is provided with two intake valves (12), a nozzle tip of the fuel injector (18) is located between the two intake valves (12), and the electrode bottom-side spray hole is located outside a movable range of the two intake valves (12) while the side-of-the-electrode spray hole is located inside the movable range of the two intake valves (12) as viewed along a longitudinal axis of the fuel injector (18) in the fuel spraying direction.

9. The spark-ignition direct-injection engine according to claim 8, wherein the angle between the axes of the electrode bottom-side spray hole and the side-of-the-electrode spray hole is set within a range of 15° to 25°.

10. The spark-ignition direct-injection engine according to one of claims 7 to 9, wherein the distance from each of the electrode bottom-side spray hole and the side-of-the-electrode spray hole to the electrode of the spark plug (16) is set to at least 20 mm large.

11. The spark-ignition direct-injection engine according to one of the preceding claims, wherein the cylinder (2) is provided with two intake valves (12), a nozzle tip of the fuel injector (18) is located at a peripheral part of the combustion chamber (6) between the two intake valves (12), the axis of the electrode bottom-side spray hole of the fuel injector (18) directed to the area immediately on the underside of the electrode of the spark plug (16) is located outside a movable range of the two intake valves (12) as viewed from the fuel injector (18) in the fuel spraying direction, the fuel injector (18) further has at least one side-of-the-electrode spray hole of which axis is directed to an area located on a lateral side of the electrode of the spark plug (16) inside the movable range of the two intake valves (12) as viewed from the fuel injector (18) in the fuel spraying direction, the axis of the side-of-the-electrode spray hole is located above umbrellalike upper surfaces of the intake valves (12) in a middle part of the intake stroke during which the lift of the intake valves (12) increases, and the fuel injection timing controller sets the fuel injection point in the middle part of the intake stroke when the engine is run by the homogeneous charge combustion.

12. The spark-ignition direct-injection engine according to claim 11, wherein the fuel injector (18) has two side-of-the-electrode spray holes of which axes are directed to areas located on both lateral sides of the electrode of the spark plug (16), and the electrode bottom-side spray hole and the two side-of-the-electrode spray holes are located generally at apexes of a triangle surrounding the electrode of the spark plug (16) centering on a longitudinal axis of the fuel injector (18) as viewed in the fuel spraying direction.

13. The spark-ignition direct-injection engine according to claim 12, wherein the angle between the axes of the two side-of-the-electrode spray holes is made larger than the angle between the axes of each of the side-of-the-electrode spray holes and the electrode bottom-side spray hole.

14. The spark-ignition direct-injection engine according to one of claims 11 to 13, wherein an upper part of an outer boundary surface of a fuel spray ejected from the side-of-the-electrode spray hole is generally parallel to an intake valve side portion of a ceiling of the combustion chamber (6).

15. The spark-ignition direct-injection engine according to one of claims 11 to 14, wherein the angle between the axes of the electrode bottom-side spray hole and the side-of-the-electrode spray hole is set within a range of 15° to 25°.

16. The spark-ignition direct-injection engine according to one of claims 11 to 15, wherein the axis of the side-of-the-electrode spray hole is located above a top surface of the piston (5) when the piston (5) is at a top dead center position in the intake stroke as viewed from the fuel injector (18) in the fuel spraying direction.

## Patentansprüche

1. Fremd- bzw. funkengezündete Brennkraftmaschine mit Direkteinspritzung, umfassend:
eine in der Brennkraftmaschine montierte Zündkerze (16), wobei eine Elektrode der Zündkerze (16) sich in eine Verbrennungskammer (6) erstreckt, die in einem Zylinder (2) ausgebildet ist;
einen Injektor bzw. eine Brennstoffeinspritzdüse (18) zum Einspritzen von Brennstoff in die Verbrennungskammer (6), wobei eine Brennstoffeinspritzrichtung, in welcher die Brennstoffeinspritzdüse (18) den Brennstoff einspritzt, in Richtung der Umgebung der Elektrode der Zündkerze (16) gerichtet ist; und
eine Brennstoffeinspritz-Zeitsteuerung bzw. Regelung zum Festlegen bzw. Setzen eines Brennstoffeinspritzpunkts der Brennstoffeinspritzdüse (18) in einem Verdichtungstakt, wenn die Brennkraftmaschine mit Schichtladeverbrennung betrieben wird, und in einem Ansaugtakt, wenn die Brennkraftmaschine mit homogener Ladungsverbrennung betrieben wird; **dadurch gekennzeichnet, dass**:
die Brennstoffeinspritzdüse (18) ein Sprühloch bzw. Düsenloch auf der Elektrodenunterseite hat, dessen Achse in einen Bereich direkt auf bzw. an der Unterseite der Elektrode der Zündkerze (16) gerichtet ist, und ein kolbenseitiges Sprühloch, dessen Achse von der Brennstoffeinspritzdüse (18) in die Brennstoffeinspritzrichtung gesehen in einen Bereich weiter auf bzw. an der Unterseite des Bereichs gerichtet ist, auf den die Achse des Sprühlochs auf der Elektrodenunterseite gerichtet ist, wobei ein Brennstoffspray, das von jedem der Sprühlöcher ausgestoßen wird, einen Sprühwinkel hat und wobei das Sprühloch auf der Elektrodenunterseite und das kolbenseitige Sprühloch derart angeordnet sind, dass der Winkel zwischen den Achsen des Sprühlochs auf der Elektrodenunterseite und dem kolbenseitigen Sprühloch größer als der Sprühwinkel des aus jedem der zwei Sprühlöcher ausgestoßenen Brennstoffs ist, wenn die Brennkraftmaschine mit Schichtladeverbrennung betrieben wird.

2. Fremdgezündete Brennkraftmaschine mit Direkteinspritzung nach Anspruch 1, wobei der Zylinder (2) zwischen zwei Einlassventilen (12) bereitgestellt ist, eine Düsenspitze der Brennstoffeinspritzdüse (18) sich zwischen den zwei Einlassventilen (12) befindet und zwei Sprühlöcher entlang einer Längsachse der Brennstoffeinspritzdüse (18) in der Brennstoffeinspritzrichtung gesehen außerhalb eines Bewegungsbereichs der zwei Einlassventile (12) angeordnet sind.

3. Fremdgezündete Brennkraftmaschine mit Direkteinspritzung nach Anspruch 2, wobei die Brennstoffeinspritzdüse (18) eine Vielzahl von kolbenseitigen Sprühlöchern hat, die sich benachbart zueinander befinden, wobei die kolbenseitigen Sprühlöcher einzelne eigene Achsen haben und wobei der Winkel zwischen den Achsen des Sprühlochs auf der Elektrodenunterseite und jedem der kolbenseitigen Sprühlöcher benachbart zu dem Sprühloch auf der Elektrodenunterseite größer als der Winkel zwischen den Achsen der benachbarten kolbenseitigen Sprühlöcher ist.

4. Fremdgezündete Brennkraftmaschine mit Direkteinspritzung nach einem der Ansprüche 1 bis 3, wobei der Winkel zwischen den Achsen des Sprühlochs auf der Elektrodenunterseite und jedem der kolbenseitigen Sprühlöcher mindestens 25° groß gemacht ist.

5. Fremdgezündete Brennkraftmaschine mit Direkteinspritzung nach einem der Ansprüche 1 bis 4, wobei die Brennstoffeinspritzdüse (18) ferner zumindest ein elektrodenseitiges Sprühloch aufweist, dessen Achse auf einen Bereich gerichtet ist, der sich von der Brennstoffeinspritzdüse (18) in die Brennstoffeinspitzrichtung gesehen auf bzw. an einer Querseite der Elektrode der Zündkerze (16) befindet, und wobei der Winkel zwischen den Achsen des Sprühlochs auf der Elektrodenunterseite und dem kolbenseitigen Sprühloch größer als der Winkel zwischen den Achsen des Sprühlochs auf der Elektrodenunterseite und dem elektrodenseitigen Sprühloch ist.

6. Fremdgezündete Brennkraftmaschine mit Direkteinspritzung nach Anspruch 5, die ferner umfasst:
eine Brennstoffdrucksteuerung bzw. Regelung zum Festlegen bzw. Setzen des Drucks, der auf den an die Brennstoffeinspritzdüse (18) zugeführten Brennstoff angewendet wird, auf einen Pegel, der für die Schichtladeverbrennung geeignet ist, wenn die Brennkraftmaschine mit Schichtladeverbrennung betrieben wird;
wobei das Sprühloch auf der Elektrodenunterseite und das elektrodenseitige Sprühloch derart angeordnet sind, dass der Winkel zwischen den Achsen des Sprühlochs auf der Elektrodenunterseite und dem elektrodenseitigen Sprühloch gleich oder kleiner als der Sprühwinkel des jeweils von dem Sprühloch auf der Elektrodenunterseite und dem elektrodenseitigen Sprühloch ausgestoßenen Brennstoffs ist, wenn die Brennkraftmaschine mit Schichtladeverbrennung betrieben wird.

7. Fremdgezündete Brennkraftmaschine mit Direkteinspritzung nach einem der vorangehenden Ansprüche, die ferner umfasst:
ein Brennstoffdruckregelmodul, das den Druck, der auf den an die Brennstoffeinspritzdüse (18) zugeführten Brennstoff angewendet wird, auf einen Pegel reguliert, der höher als ein Brennstoffdruck, der beim Kaltstart der Brennkraftmaschine angelegt wird, ist, wenn die Brennkraftmaschine in einem warmen Betriebszustand ist;
wobei die Brennstoffeinspritz-Zeitsteuerung bzw. Regelung den Brennstoffeinspritzpunkt der Brennstoffeinspritzdüse (18) auf einen Punkt festlegt, der für die homogene Ladungsverbrennung geeignet ist, wenn die Brennkraftmaschine in einem kalten Betriebszustand ist, in dem die Brennkraftmaschinentemperatur niedriger als ein spezifizierter Pegel ist, und auf einen Punkt, der für die Schichtladeverbrennung in zumindest einem Mittel- bzw. Teillastbereich geeignet ist, wenn die Brennkraftmaschine in dem warmen Betriebszustand ist, in dem die Brennkraftmaschinentemperatur gleich oder höher als der spezifizierte Pegel ist;
wobei die Brennstoffeinspritzdüse (18) ferner zumindest ein elektrodenseitiges Sprühloch hat, dessen Achse auf einen Bereich gerichtet ist, der sich von der Brennstoffeinspritzdüse (18) in die Brennstoffeinspritzrichtung gesehen auf bzw. an einer Querseite der Elektrode der Zündkerze (16) befindet; und
wobei das Sprühloch auf der Elektrodenunterseite und das elektrodenseitige Sprühloch derart angeordnet sind, dass der Winkel zwischen den Achsen des Sprühlochs auf der Elektrodenunterseite und des elektrodenseitigen Sprühlochs gleich oder kleiner als der Sprühwinkel des Brennstoffs wird, der jeweils von dem Sprühloch auf der Elektrodenunterseite und dem elektrodenseitigen Sprühloch unter dem von dem Brennstoffdruckregelmodul regulierten Druck ausgestoßen wird, wenn die Brennkraftmaschine in dem warmen Betriebszustand ist, in dem der Brennstoffeinspritzpunkt der Brennstoffeinspritzdüse (18) auf einen Punkt festgelegt ist, der für die homogene Ladungsverbrennung geeignet ist, und so dass der Winkel zwischen den Achsen des Sprühlochs auf der Elektrodenunterseite und des elektrodenseitigen Sprühlochs größer als der Sprühwinkel des Brennstoffs wird, der jeweils von dem Sprühloch auf der Elektrodenunterseite und dem elektrodenseitigen Sprühloch unter dem von dem Brennstoffdruckregelmodul regulierten Druck ausgestoßen wird, wenn die Brennkraftmaschine in dem kalten Betriebszustand ist.

8. Fremdgezündete Brennkraftmaschine mit Direkteinspritzung nach Anspruch 7, wobei der Zylinder (2) mit zwei Einlassventilen (12) versehen ist, eine Düsenspitze der Brennstoffeinspritzdüse (18) sich zwischen den zwei Einlassventilen (12) befindet und das Sprühloch auf der Elektrodenunterseite sich außerhalb eines Bewegungsbereichs der zwei Einlassventile (12) befindet, während das elektrodenseitige Sprühloch sich entlang einer Längsachse der Brennstoffeinspritzdüse (18) in der Brennstoffeinspritzrichtung gesehen innerhalb des Bewegungsbereichs der zwei Einlassventile (12) befindet.

9. Fremdgezündete Brennkraftmaschine mit Direkteinspritzung nach Anspruch 8, wobei der Winkel zwischen den Achsen des Sprühlochs auf der Elektrodenunterseite und dem elektrodenseitigen Sprühloch in einem Bereich von 15° bis 25° festgelegt ist.

10. Fremdgezündete Brennkraftmaschine mit Direkteinspritzung nach einem der Ansprüche 7 bis 9, wobei der Abstand von dem Sprühloch auf der Elektrodenunterseite und dem elektrodenseitigen Sprühloch zu der Elektrode der Zündkerze (16) jeweils auf eine Größe von mindestens 20 mm festgelegt ist.

11. Fremdgezündete Brennkraftmaschine mit Direkteinspritzung nach einem der vorangehenden Ansprüche, wobei der Zylinder (2) mit zwei Einlassventilen (12) versehen ist, eine Düsenspitze der Brennstoffeinspritzdüse (18) sich an einem Umfangsteil der Verbrennungskammer (6) zwischen den zwei Einlassventilen (12) befindet, die Achse des Sprühlochs auf der Elektrodenunterseite der Brennstoffeinsritzdüse (18), die auf bzw. an den Bereich direkt auf der Unterseite der Elektrode der Zündkerze (16) ausgerichtet ist, sich von der Brennstoffeinspritzdüse (18) in die Brennstoffeinspritzrichtung gesehen außerhalb eines Bewegungsbereichs der zwei Einlassventile (12) befindet, wobei die Brennstoffeinspritzdüse (18) ferner zumindest ein elektrodenseitiges Sprühloch hat, dessen Achse auf einen Bereich gerichtet ist, der sich von der Brennstoffeinspritzdüse (18) in die Brennstoffeinspritzrichtung gesehen auf bzw. an einer Querseite der Elektrode der Zündkerze (16) innerhalb des Bewegungsbereichs der zwei Einlassventile (12) befindet, wobei die Achse des elektrodenseitigen Sprühlochs sich in einem Mittelteil des Ansaugtakts, während welchem der Hub der Einlassventile (12) zunimmt, über bzw. oberhalb von schirmartigen oberen Flächen der Einlassventile (12) befindet und die Brennstoffeinspritz-Zeitsteuerung den Brennstoffeinspritzpunkt in dem Mittelteil des Ansaugtakts festlegt bzw. setzt, wenn die Brennkraftmaschine mit der homogenen Ladungsverbrennung betrieben wird.

12. Fremdgezündete Brennkraftmaschine mit Direkteinspritzung nach Anspruch 11, wobei die Brennstoffeinspritzdüse (18) zwei elektrodenseitige Sprühlöcher hat, deren Achsen auf Bereiche gerichtet sind, die sich auf bzw. an beiden Querseiten der Elektrode der Zündkerze (16) befinden, und das Sprühloch auf der Elektrodenunterseite und die zwei elektrodenseitigen Sprühlöcher sich im Allgemeinen an Spitzen eines Dreiecks befinden, das die Elektrode der Zündkerze (16) umschließt und in der Brennstoffeinspritzrichtung gesehen auf eine Längsachse der Brennstoffeinspritzdüse (18) zentriert ist.

13. Fremdgezündete Brennkraftmaschine mit Direkteinspritzung nach Anspruch 12, wobei der Winkel zwischen den Achsen der zwei elektrodenseitigen Sprühlöcher größer als der Winkel zwischen den Achsen jedes der elektrodenseitigen Sprühlöcher und des Sprühlochs auf der Elektrodenunterseite gemacht ist.

14. Fremdgezündete Brennkraftmaschine mit Direkteinspritzung nach einem der Ansprüche 11 bis 13, wobei ein oberer Teil einer äußeren Grenzfläche eines von dem elektrodenseitigen Sprühloch ausgestoßenen Brennstoffsprays im Allgemeinen parallel zu einem einlassventilseitigen Abschnitt einer Decke der Verbrennungskammer (6) ist.

15. Fremdgezündete Brennkraftmaschine mit Direkteinspritzung nach einem der Ansprüche 11 bis 14, wobei der Winkel zwischen den Achsen des Sprühlochs auf der Elektrodenunterseite und dem elektrodenseitigen Sprühloch in einem Bereich von 15° bis 25° festgelegt ist.

16. Fremdgezündete Brennkraftmaschine mit Direkteinspritzung nach einem der Ansprüche 11 bis 15, wobei die Achse des elektrodenseitigen Sprühlochs sich über einer oberen Fläche des Kolbens (5) befindet, wenn der Kolben (5) von der Brennstoffeinspritzdüse (18) in der Brennstoffeinspritzrichtung gesehen an einem oberen Totpunkt in dem Ansaugtakt ist.

## Revendications

1. Machine motrice à allumage commandé et à injection directe, comprenant :
une bougie d'allumage (16) montée dans ladite machine motrice, une électrode de la bougie d'allumage (16) s'étendant jusque dans une chambre de combustion (6) ménagée dans un cylindre (2) ;
un injecteur de carburant (18) pour injecter du carburant jusque dans la chambre de combustion (6), une direction de pulvérisation de carburant dans laquelle l'injecteur de carburant (18) injecte le carburant étant dirigé vers la proximité de l'électrode de la bougie d'allumage (16) ; et
un contrôleur du moment d'injection de carburant pour ajuster une position d'injection de carburant de l'injecteur de carburant (18) dans une course de compression lorsque la machine motrice est en fonctionnement par une combustion à charge stratifiée et dans une course d'admission lorsque la machine motrice est en fonctionnement par une combustion à charge homogène, **caractérisé en ce que** :
l'injecteur de carburant (18) a un trou de pulvérisation vers l'électrode sur la face inférieure dont l'axe est dirigé vers une surface directement sur la face de dessous de l'électrode de la bougie d'allumage (16), et un trou de pulvérisation du côté du piston dont l'axe est dirigé vers une surface supplémentaire sur la face de dessous de la surface vers laquelle est dirigé l'axe du trou de pulvérisation vers l'électrode sur la face inférieure, en regardant depuis l'injecteur de carburant (18) dans la direction de pulvérisation du carburant, une pulvérisation de carburant éjecté depuis chacun des trous de pulvérisation ayant un angle de pulvérisation, et sachant que le trou de pulvérisation vers l'électrode sur la face inférieure et le trou de pulvérisation du côté du piston sont disposés de telle sorte que l'angle entre les axes du trou de pulvérisation vers l'électrode sur la face inférieure et du trou de pulvérisation du côté du piston est plus grand que l'angle de pulvérisation du carburant éjecté depuis chacun des deux trous de pulvérisation lorsque la machine motrice est en fonctionnement par la combustion à charge stratifiée.

2. Machine motrice à allumage commandé et à injection directe selon la revendication 1, dans laquelle le cylindre (2) est prévu avec deux soupapes d'admission (12), dans laquelle une pointe de gicleur de l'injecteur de carburant (18) est placée entre les deux soupapes d'admission (12) et dans laquelle lesdits deux trous de pulvérisation sont placés à l'extérieur d'une plage réglable des deux soupapes d'admission (12) en regardant le long d'un axe longitudinal de l'injecteur de carburant (18) dans la direction de pulvérisation du carburant.

3. Machine motrice à allumage commandé et à injection directe selon la revendication 2, dans laquelle l'injecteur de carburant (18) a une pluralité de trous de pulvérisation du côté du piston placés en adjacence l'un par rapport à l'autre, les trous de pulvérisation du côté du piston ayant individuellement de propres axes, et dans laquelle l'angle entre les axes du trou de pulvérisation vers l'électrode sur la face inférieure et un quelconque des trous de pulvérisation du côté du piston adjacents au trou de pulvérisation vers l'électrode sur la face inférieure est plus grand que l'angle entre les axes des trous de pulvérisation adjacents du côté du piston.

4. Machine motrice à allumage commandé et à injection directe selon l'une des revendications 1 à 3, dans laquelle l'angle entre les axes du trou de pulvérisation vers l'électrode sur la face inférieure et un quelconque des trous de pulvérisation du côté du piston est réalisé avec une ouverture d'au moins 25°.

5. Machine motrice à allumage commandé et à injection directe selon l'une des revendications 1 à 4, dans laquelle l'injecteur de carburant (18) a en outre au moins un trou de pulvérisation du côté de l'électrode dont l'axe est dirigé vers une surface placée sur un côté latéral de l'électrode de la bougie d'allumage (16) en regardant depuis l'injecteur de carburant (18) dans la direction de pulvérisation du carburant, et dans laquelle l'angle entre les axes du trou de pulvérisation vers l'électrode sur la face inférieure et du trou de pulvérisation du côté du piston est plus grand que l'angle entre les axes du trou de pulvérisation vers l'électrode sur la face inférieure et du trou de pulvérisation du côté de l'électrode.

6. Machine motrice à allumage commandé et à injection directe selon la revendication 5, comprenant en outre :
un contrôleur de la pression du carburant pour ajuster la pression appliquée sur le carburant fourni à l'injecteur de carburant (18) sur un niveau approprié pour la combustion à charge stratifiée lorsque la machine motrice est en fonctionnement par une combustion à charge stratifiée ;
dans laquelle le trou de pulvérisation vers l'électrode sur la face inférieure et le trou de pulvérisation du côté de l'électrode sont disposés de telle sorte que l'angle entre les axes du trou de pulvérisation vers l'électrode sur la face inférieure et du trou de pulvérisation du côté de l'électrode devient égal ou plus petit que l'angle de pulvérisation du carburant éjecté depuis chacun des trous parmi le trou de pulvérisation vers l'électrode sur la face inférieure et le trou de pulvérisation du côté de l'électrode lorsque la machine motrice est en fonctionnement par une combustion à charge stratifiée.

7. Machine motrice à allumage commandé et à injection directe selon l'une des revendications précédentes, comprenant en outre :
un régulateur de la pression du carburant qui régule la pression appliquée sur le carburant fourni à l'injecteur de carburant (18) lorsque la machine motrice est dans un état de fonctionnement à chaud sur un niveau plus élevé qu'une pression de carburant appliqué au démarrage à froid de la machine motrice ;
dans laquelle le contrôleur du moment d'injection de carburant ajuste la position d'injection de carburant de l'injecteur de carburant (18) sur une position appropriée pour la combustion à charge homogène lorsque la machine motrice est dans un état de fonctionnement à froid dans lequel la température de la machine motrice est inférieure à un niveau spécifié et sur une position appropriée pour la combustion à charge stratifiée au moins dans une plage de charge partielle lorsque la machine motrice est dans l'état de fonctionnement à chaud dans lequel la température de la machine motrice est égale ou supérieure au niveau spécifié ;
dans laquelle l'injecteur de carburant (18) a en outre au moins un trou de pulvérisation du côté de l'électrode dont l'axe est dirigé vers une surface placée sur un côté latéral de l'électrode de la bougie d'allumage (16) en regardant depuis l'injecteur de carburant (18) dans la direction de pulvérisation du carburant ; et
dans laquelle le trou de pulvérisation vers l'électrode sur la face inférieure et le trou de pulvérisation du côté de l'électrode sont disposés de telle sorte que l'angle entre les axes du trou de pulvérisation vers l'électrode sur la face inférieure et du trou de pulvérisation du côté de l'électrode devient égal ou plus petit que l'angle de pulvérisation du carburant éjecté depuis chacun des trous parmi le trou de pulvérisation vers l'électrode sur la face inférieure et le trou de pulvérisation du côté de l'électrode sous la pression de carburant régulée par le régulateur de la pression du carburant lorsque la machine motrice est dans l'état de fonctionnement à chaud dans lequel la position d'injection de carburant de l'injecteur de carburant (18) est ajustée sur la position appropriée pour la combustion à charge homogène, et de telle sorte que l'angle entre les axes du trou de pulvérisation vers l'électrode sur la face inférieure et du trou de pulvérisation du côté de l'électrode devient plus grand que l'angle de pulvérisation du carburant éjecté depuis chacun des trous parmi le trou de pulvérisation vers l'électrode sur la face inférieure et le trou de pulvérisation du côté de l'électrode sous la pression de carburant régulée par le régulateur de la pression du carburant lorsque la machine motrice est dans l'état de fonctionnement à froid.

8. Machine motrice à allumage commandé et à injection directe selon la revendication 7, dans laquelle le cylindre (2) est prévu avec deux soupapes d'admission (12), dans laquelle une pointe de gicleur de l'injecteur de carburant (18) est placée entre les deux soupapes d'admission (12) et dans laquelle le trou de pulvérisation vers l'électrode sur la face inférieure est placé à l'extérieur d'une plage réglable des deux soupapes d'admission (12) tandis que le trou de pulvérisation du côté de l'électrode est placé à l'intérieur de la plage réglable des deux soupapes d'admission (12) en regardant le long d'un axe longitudinal de l'injecteur de carburant (18) dans la direction de pulvérisation du carburant.

9. Machine motrice à allumage commandé et à injection directe selon la revendication 8, dans laquelle l'angle entre les axes du trou de pulvérisation vers l'électrode sur la face inférieure et du trou de pulvérisation du côté de l'électrode est ajusté dans une plage de 15° à 25°.

10. Machine motrice à allumage commandé et à injection directe selon l'une des revendications 7 à 9, dans laquelle la distance depuis chacun des trous parmi le trou de pulvérisation vers l'électrode sur la face inférieure et le trou de pulvérisation du côté de l'électrode vers l'électrode de la bougie d'allumage (16) est ajustée sur une valeur d'au moins 20 mm.

11. Machine motrice à allumage commandé et à injection directe selon l'une des revendications précédentes, dans laquelle le cylindre (2) est prévu avec deux soupapes d'admission (12), dans laquelle une pointe de gicleur de l'injecteur de carburant (18) est placée sur une partie périphérique de la chambre de combustion (6) entre les deux soupapes d'admission (12), dans laquelle l'axe du trou de pulvérisation vers l'électrode sur la face inférieure de l'injecteur de carburant (18) dirigé vers une surface directement sur la face de dessous de l'électrode de la bougie d'allumage (16) est placé à l'extérieur d'une plage réglable des deux soupapes d'admission (12) en regardant depuis l'injecteur de carburant (18) dans la direction de pulvérisation du carburant, dans laquelle l'injecteur de carburant (18) a en outre au moins un trou de pulvérisation du côté de l'électrode dont l'axe est dirigé vers une surface placée sur un côté latéral de l'électrode de la bougie d'allumage (16) à l'intérieur d'une plage réglable des deux soupapes d'admission (12) en regardant depuis l'injecteur de carburant (18) dans la direction de pulvérisation du carburant, dans laquelle l'axe du trou de pulvérisation du côté de l'électrode est placé au-dessus des surfaces supérieures des soupapes d'admission (12) à la manière d'une parapluie dans une partie médiane de la course d'admission pendant laquelle la levée des soupapes d'admission (12) augmente, et dans laquelle le contrôleur du moment d'injection de carburant ajuste la position d'injection de carburant dans la partie médiane de la course d'admission lorsque la machine motrice est en fonctionnement par la combustion à charge homogène.

12. Machine motrice à allumage commandé et à injection directe selon la revendication 11, dans laquelle l'injecteur de carburant (18) a deux trous de pulvérisation du côté de l'électrode dont les axes sont dirigés vers les surfaces placées sur les deux côtés latéraux de l'électrode de la bougie d'allumage (16), et dans laquelle le trou de pulvérisation vers l'électrode sur la face inférieure et les deux trous de pulvérisation du côté de l'électrode sont placés généralement sur les sommets d'un triangle qui entoure l'électrode de la bougie d'allumage (16) en se centrant sur un axe longitudinal de l'injecteur de carburant (18) en regardant dans la direction de pulvérisation du carburant.

13. Machine motrice à allumage commandé et à injection directe selon la revendication 12, dans laquelle l'angle entre les axes des deux trous de pulvérisation du côté de l'électrode est réalisé plus grand que l'angle entre les axes de chacun des trous de pulvérisation du côté de l'électrode et le trou de pulvérisation vers l'électrode sur la face inférieure.

14. Machine motrice à allumage commandé et à injection directe selon l'une des revendications 11 à 13, dans laquelle une partie supérieure d'une surface limitrophe extérieure d'une pulvérisation de carburant éjecté depuis le trou de pulvérisation du côté de l'électrode est généralement parallèle à une partie latérale de soupape d'admission d'un plafond de la chambre de combustion (6).

15. Machine motrice à allumage commandé et à injection directe selon l'une des revendications 11 à 14, dans laquelle l'angle entre les axes du trou de pulvérisation vers l'électrode sur la face inférieure et du trou de pulvérisation du côté de l'électrode est ajusté dans une plage de 15° à 25°.

16. Machine motrice à allumage commandé et à injection directe selon l'une des revendications 11 à 15, dans laquelle l'axe du trou de pulvérisation du côté de l'électrode est placé au-dessus d'une surface supérieure du piston (5) lorsque le piston (5) est sur une position de point mort supérieur dans la course d'admission en regardant depuis l'injecteur de carburant (18) dans la direction de pulvérisation du carburant.
